# EUROPEAN PATENT SPECIFICATION

(11) **EP 2 333 255 B1**
(45) Date of publication and mention of the grant of the patent: **06.07.2016**
(21) Application number: 10192643.4
(22) Date of filing: 25.11.2010
(51) Int. Cl.: F01K 7/16, F01K 13/00, F01K 17/02, F01K 7/22, F01K 17/04

(54) **Fossil fuel combustion thermal power system including carbon dioxide separation and capture unit**
Wärmekraftsystem für fossile Brennstoffe mit Kohlenstoffdioxidtrennungs- und -abscheidungseinheit
Centrale thermique à combustible fossile incluant une unité de séparation et de capture du dioxyde de carbone

(30) Priority: 25.11.2009 JP 2009266939; 25.12.2009 JP 2009293717
(43) Date of publication of application: 15.06.2011
(73) Proprietor: Mitsubishi Hitachi Power Systems, Ltd., Yokohama 220-8401 (JP)
(72) Inventor: Mishima, Nobuyoshi, Tokyo 100-8220 (JP); Sugiura, Takashi, Tokyo 100-8220 (JP); Matsuura, Osamu, Tokyo 100-8220 (JP); Kosaka, Tetsuya, Tokyo 100-8220 (JP)
(74) Representative: MERH-IP Matias Erny Reichl Hoffmann Patentanwälte PartG mbB

(56) References cited:
- EP-A1- 2 305 364
- WO-A2-2011/051468
- WO-A2-2011/051473
- WO-A2-2011/051494
- GB-A- 2 470 645

## Description

### BACKGROUND OF THE INVENTION

### (Field of the Invention)

The present invention relates to a fossil fuel combustion thermal power system including a carbon dioxide separation and capture unit.

### (Description of Related Art)

As a fossil fuel combustion thermal power system including a carbon dioxide separation and capture unit relating to the present invention, there is a system including a PCC unit (PCC: post combustion CO₂ capture) for separating and capturing carbon dioxide from fossil fuel, for example, the exhaust gas of a coal combustion boiler.

In Japanese Patent 4274846, as a capture system of carbon dioxide included in the exhaust gas of a boiler, a carbon dioxide capture system including a steam turbine having a high-pressure turbine, an intermediate-pressure turbine, and a low-pressure turbine, a boiler for generating steam for driving these turbines, a carbon dioxide absorption tower having a carbon dioxide absorbing solution for absorbing and removing carbon dioxide from the combustion exhaust gas of the boiler, a reproduction tower for reproducing the carbon dioxide absorbing solution absorbing carbon dioxide, a compressor for compressing the removed carbon dioxide, a turbine for the compressor driven by a part of the exhaust steam exhausted from the high-pressure turbine, a turbine for an auxiliary unit driven by a part of the exhaust steam exhausted from the intermediate-pressure turbine, and a supply pipe for supplying exhaust steam exhausted from the turbine for the compressor and the turbine for the auxiliary unit to the reboiler of the reproduction tower as a heating source, is disclosed.

Generally, in the carbon dioxide separation and capture unit for capturing carbon dioxide from the exhaust gas of the boiler, the absorbing solution circulation pump is driven so as to circulate the absorbing solution between the absorption tower and the reproduction tower, and the carbon dioxide included in the exhaust gas of the boiler is absorbed by the absorbing solution in the absorption tower, and the carbon dioxide absorbed by the absorbing solution is separated and captured by the reproduction tower.

Namely, the carbon dioxide component in the exhaust gas of the boiler and the absorbing solution are permitted to make contact with each other in the absorption tower, and by a chemical reaction (heat generation reaction) of the absorbing solution at about 40°C with the carbon dioxide in the gas, the carbon dioxide is absorbed.

A carbon-dioxide-enriched absorbing solution at about 70°C due to the chemical reaction of the absorbing solution with the carbon dioxide at this time leaves the absorption tower, then exchanges heat with a reproduced absorbing solution (called a lean absorbing solution) at about 120°C supplied from the reproduction tower, is heated up to about 110°C, and flows again into the absorption tower.

The enriched absorbing solution after heat exchange is heated again to 120°C to 130°C in the reproduction tower and separates the carbon dioxide absorbed by the enriched absorbing solution.

The absorbing solution separating the carbon dioxide by the reproduction tower becomes a lean absorbing solution, is introduced again into the absorption tower, and absorbs carbon dioxide in the exhaust gas of the boiler.

In this case, the absorbing solution in the reproduction tower is heated so as to separate the carbon dioxide and become the lean absorbing solution, so that the reboiler for supplying heating steam to the reproduction tower must generate a large quantity of steam.

Patent Document 1: Japanese Patent No. 4274846

WO2011/051494 A2 which has been published after the priority date of the present application relates to a method for retrofitting a fossil-fueled power station having a multiple-casing steam turbine with a carbon dioxide separation device, in which the maximum flow rate of the steam turbine is adjusted to the process steam that is to be removed for the operation of the carbon dioxide separation device, the carbon dioxide separation device is connected to an intermediate superheater line via a process steam line, and an auxiliary condenser is mounted in parallel to the carbon dioxide separation device so that excess process steam is condensed in the auxiliary condenser in the event of failure or a deliberate shut-off of the carbon dioxide separation device.

EP 2 305 364 A1 which has been published after the priority date of the present application relates to a fossil fired power plant operable when a steam is extracted for the operation of a CO2 capture system as well as when the CO2 capture system is not operating and no steam is extracted. In view thereof, it is disclosed to provide a water steam cycle of the fossil fired power plant with two steam turbine arrangements, one for continuous operation independent of CO2 capture operation, and one which can at least partially be shut down during CO2 capture operation.

### SUMMARY OF THE INVENTION

In the carbon dioxide capture system described in Japanese Patent No. 4274846, when the pump for circulating the absorbing solution for absorbing and separating carbon dioxide between the absorption tower and the reproduction tower of the carbon dioxide separation and capture unit trips from some cause and the carbon dioxide separation and capture unit stops urgently, the destination of exhaust steam supplied to the reboiler from the turbine for the compressor and the turbine for the auxiliary unit which are driven by the exhaust steam exhausted from the high-pressure turbine and the intermediate-pressure turbine of the steam turbine is lost, so that a problem arises that the load on the turbine for the compressor and the turbine for the auxiliary unit is changed greatly, and a large load change is caused to the steam turbine plant, thus the output of the steam turbine is lowered.

An object of the present invention is to provide a fossil fuel combustion thermal power system including a carbon dioxide separation and capture unit capable of suppressing a load change caused to the fossil fuel combustion thermal power system when the carbon dioxide separation and capture unit urgently stops the operation.

In view of this object, the present invention proposes a fossil fuel combustion thermal power system having the features of claim 1. Preferred embodiments of the invention are described in the dependent claims.

According to another aspect, a fossil fuel combustion thermal power system including a carbon dioxide separation and capture unit comprises: a fossil fuel combustion thermal power system including a boiler for burning fossil fuel and generating steam and a steam turbine including a high-pressure turbine driven by the steam generated by the boiler for generating power, and a carbon dioxide separation and capture unit including an absorption tower for absorbing and capturing carbon dioxide included in the exhaust gas discharged from the boiler by burning fossil fuel in the boiler of the fossil fuel combustion thermal power system and a reproduction tower of an absorbing solution for separating carbon dioxide from the absorbing solution absorbing carbon dioxide by circulating the absorbing solution between the reproduction tower and the absorption tower,
the fossil fuel combustion thermal power system including the carbon dioxide separation and capture unit further comprising: a back-pressure turbine driven by extraction steam extracted from the high-pressure turbine of the fossil fuel combustion thermal power system through an extraction pipe; a reboiler for supplying heating steam to the reproduction tower of the carbon dioxide separation and capture unit; a steam pipe for supplying steam flowing down through the back-pressure turbine of the fossil fuel combustion thermal power system to the reboiler as a heat source; an emergency relief pipe interconnected to the extraction pipe for supplying the extraction steam extracted from the high-pressure turbine of the fossil fuel combustion thermal power system to the back-pressure turbine for permitting the extraction steam flowing down through the extraction pipe to bypass the back-pressure turbine and flow down to a condenser; and/or an emergency relief valve installed on the emergency relief pipe for controlling flow of the extraction steam through the emergency relief pipe.

According to another aspect, a fossil fuel combustion thermal power system including a carbon dioxide separation and capture unit comprises a fossil fuel combustion thermal power system including a boiler for burning fossil fuel and generating steam and a steam turbine including a high-pressure turbine and a intermediate-pressure turbine driven by the steam generated by the boiler for generating power, and a carbon dioxide separation and capture unit including an absorption tower for absorbing and capturing carbon dioxide included in the exhaust gas discharged from the boiler by burning fossil fuel in the boiler of the fossil fuel combustion thermal power system and a reproduction tower of an absorbing solution for separating carbon dioxide from the absorbing solution absorbing carbon dioxide by circulating the absorbing solution between the reproduction tower and the absorption tower,
the fossil fuel combustion thermal power system including the carbon dioxide separation and capture unit further comprising: a reheat steam extraction pipe branching from a high-temperature reheat steam pipe for supplying reheat steam reheated by the boiler to the intermediate-pressure turbine from the boiler of the fossil fuel combustion thermal power system; a temperature lowering unit for lowering a temperature of the reheat steam extracted through the reheat steam extraction pipe; a back-pressure turbine driven by the reheat steam lowered in temperature by the temperature lowering unit; a reboiler for supplying heating steam to the reproduction tower of the carbon dioxide separation and capture unit; a steam pipe for supplying the steam flowing down through the back-pressure turbine of the fossil fuel combustion thermal power system to the reboiler as a heat source; a second emergency relief pipe interconnected to the reheat steam extraction pipe for supplying the reheat steam extracted through the reheat steam extraction pipe of the fossil fuel combustion thermal power system to the back-pressure turbine for permitting the reheat steam flowing down through the reheat steam extraction pipe to bypass the back-pressure turbine and flow down to a condenser; and/or a second emergency relief valve installed in the second emergency relief pipe for controlling flow of the reheat steam through the second emergency relief pipe.

According to another aspect, a fossil fuel combustion thermal power system including a carbon dioxide separation and capture unit comprises: a fossil fuel combustion thermal power system including a boiler for burning fossil fuel and generating steam and a steam turbine including a high-pressure turbine and a intermediate-pressure turbine driven by the steam generated by the boiler for generating power, and a carbon dioxide separation and capture unit including an absorption tower for absorbing and capturing carbon dioxide included in the exhaust gas discharged from the boiler by burning fossil fuel in the boiler of the fossil fuel combustion thermal power system and a reproduction tower of an absorbing solution for separating carbon dioxide from the absorbing solution absorbing carbon dioxide by circulating the absorbing solution between the reproduction tower and the absorption tower,
the fossil fuel combustion thermal power system including the carbon dioxide separation and capture unit further comprising: a back-pressure turbine driven by the extraction steam extracted from the high-pressure turbine of the fossil fuel combustion thermal power system through a first extraction pipe; a second steam extraction pipe for branching a part of the exhaust steam of the intermediate-pressure turbine supplied from the intermediate-pressure turbine of the fossil fuel combustion thermal power system to a low-pressure turbine; a first steam pipe for supplying the extraction steam extracted through the second steam extraction pipe to the back-pressure turbine; a reboiler for supplying heating steam to the reproduction tower of the carbon dioxide separation and capture unit; a second steam pipe for supplying the steam flowing down through the back-pressure turbine of the fossil fuel combustion thermal power system to the reboiler as a heat source; a first emergency relief pipe interconnected to the first extraction pipe for supplying the extraction steam extracted from the high-pressure turbine of the fossil fuel combustion thermal power system to the back-pressure turbine for permitting the extraction steam flowing down through the first extraction pipe to bypass the back-pressure turbine and flow down to a condenser; a first emergency relief valve installed in the first emergency relief pipe for controlling flow of the extraction steam through the first emergency relief pipe; a third emergency relief pipe interconnected to the first steam pipe for supplying the extraction steam extracted through the second steam extraction pipe of the fossil fuel combustion thermal power system to the back-pressure turbine for permitting the extraction steam flowing down through the first steam pipe to bypass the back-pressure turbine and flow down to a condenser, and/or a third emergency relief valve installed in the third emergency relief pip for controlling flow of the reheat steam through the third emergency relief pipe.

According to the present invention, when an operation of the carbon dioxide separation and capture unit stops urgently, a fossil fuel combustion thermal power system including a carbon dioxide separation and capture unit capable of suppressing the load change of the fossil fuel combustion thermal power system can be realized.

### BRIEF DESCRIPTION OF THE DRAWINGS

Fig. 1 is a schematic flow diagram showing the fossil fuel combustion thermal power system including the carbon dioxide separation and capture unit of the first embodiment of the present invention,
Fig. 2 is a partial diagram showing the fossil fuel combustion thermal power system of the first embodiment shown in Fig. 1,
Fig. 3 is a steam I-S line diagram for explaining the expansion lines at the rated load and partial load of the steam turbine and back-pressure turbine of the fossil fuel combustion thermal power system of the embodiments of the present invention,
Fig. 4 is a schematic flow diagram showing the fossil fuel combustion thermal power system including the carbon dioxide separation and capture unit of the second embodiment of the present invention,
Fig. 5 is a partial diagram showing the fossil fuel combustion thermal power system of the second embodiment shown in Fig. 4,
Fig. 6 is a schematic flow diagram showing the fossil fuel combustion thermal power system including the carbon dioxide separation and capture unit of the third embodiment of the present invention, and
Fig. 7 is a partial diagram showing the fossil fuel combustion thermal power system of the third embodiment shown in Fig. 6.
Fig. 8 is a schematic flow diagram showing the fossil fuel combustion thermal power system including the carbon dioxide separation and capture unit of the fourth embodiment of the present invention, and
Fig. 9 is a partial diagram showing the fossil fuel combustion thermal power system of the fourth embodiment shown in Fig. 8.
Fig. 10 is a schematic flow diagram showing the fossil fuel combustion thermal power system including the carbon dioxide separation and capture unit of the fifth embodiment of the present invention, and
Fig. 11 is a partial diagram showing the fossil fuel combustion thermal power system of the fifth embodiment shown in Fig. 10.

### DETAILED DESCRIPTION OF THE INVENTION

The fossil fuel combustion thermal power system including the carbon dioxide separation and capture unit which is an embodiment of the present invention will be explained below with reference to the accompanying drawings.

### (Embodiment 1)

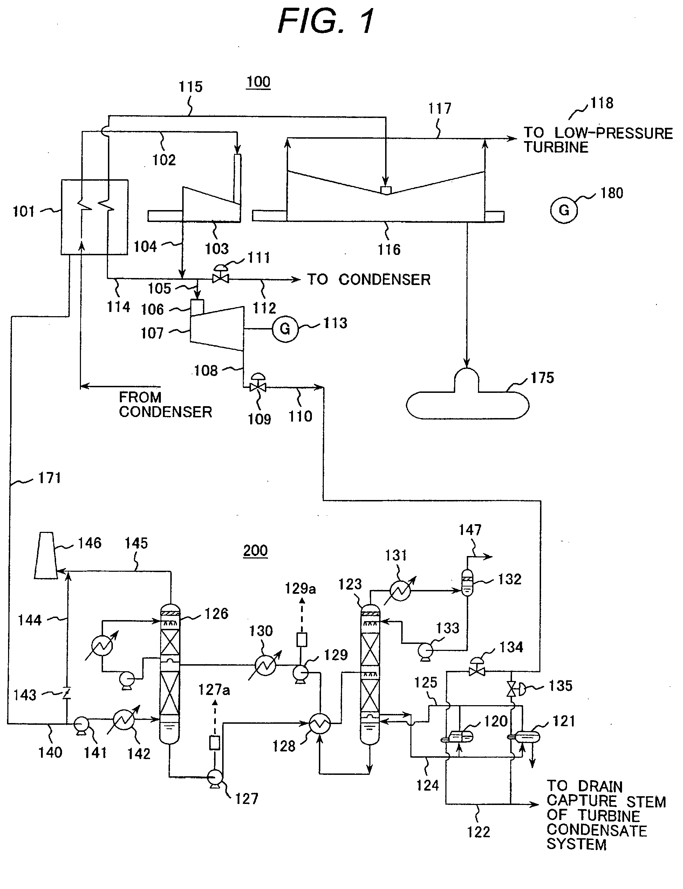

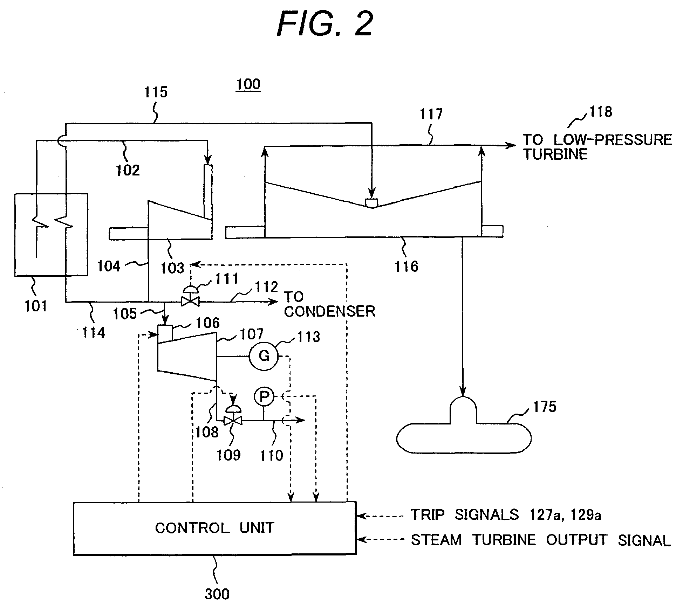

The fossil fuel combustion thermal power system including the carbon dioxide separation and capture unit of the first embodiment of the present invention will be explained by referring to Figs. 1 and 2.

Fig. 1 shows the fossil fuel combustion thermal power system including the carbon dioxide separation and capture unit of the first embodiment of the present invention.

A fossil fuel combustion thermal power system 100 composing the fossil fuel combustion thermal power system including the carbon dioxide separation and capture unit of the first embodiment shown in Fig. 1 includes a fossil fuel combustion boiler 101 for burning fossil fuel, heating condensed water supplied from a condenser, and generating steam at a high temperature and high pressure and a high-pressure turbine 103 for leading and driving the steam generated by the boiler 101 through a main steam pipe 102 from the boiler 101.

The steam decompressed due to an occurrence of power by the high-pressure turbine 103 for flowing down through an exhaust pipe 104 of the high-pressure turbine is supplied to the boiler 101 through a low-temperature reheat steam pipe 114 and is heated again by the boiler 101 to reheat the steam.

The system includes an intermediate-pressure turbine 116 for leading and driving the reheat steam heated by the boiler 101 through a high-temperature reheat steam pipe 115 from the boiler 101 and the steam reduced in pressure due to an occurrence of power by the intermediate-pressure turbine 116 for flowing down through an exhaust pipe 117 of the intermediate-pressure turbine from the intermediate-pressure turbine 116 is supplied to a low-pressure turbine 118 (not drawn).

By a generator 180 driven by the high-pressure turbine 103, intermediate-pressure turbine 116, and low-pressure turbine 118, the output of the steam turbine is taken out as power. Further, the numeral 175 indicates a deaerator.

In the fossil fuel combustion thermal power system 100, a first extraction pipe 105 branching from the low-temperature reheat steam pipe 114 for supplying the steam flowing down through the high-temperature turbine exhaust pipe 104 of the high-pressure turbine 103 to the boiler 101 for extracting a part of the steam flowing down through the low-temperature reheat steam pipe 114 in order to drive the back-pressure turbine and a back-pressure turbine 107 driven by the steam extracted through the first extraction pipe 105 are installed.

On the entrance side of the back-pressure turbine 107, a back-pressure turbine control valve 106 for controlling the output of the back-pressure turbine 107 is installed and on the exit side of the back-pressure turbine 107, an exhaust pipe path 108 (of the back-pressure turbine) for permitting the exhaust gas of the back-pressure turbine via the back-pressure turbine 107 to flow down, an exhaust pressure control valve 109 of the back-pressure turbine installed in the exhaust pipe path 108 of the back-pressure turbine for adjusting the pressure of the flowing exhaust gas of the back-pressure turbine, and an exit blast pipe 110 of the back-pressure turbine interconnected to the exhaust pipe path 108 of the back-pressure turbine for sending the exhaust gas of the back-pressure turbine to a reboiler 120 and a reclaimer 121 which are installed in a carbon dioxide separation and capture unit 200 which will be described later are installed.

On the back-pressure turbine 107, a back-pressure turbine generator 113 is installed and it is structured so as to take out the power of the back-pressure turbine 107 as electric power.

To the low-temperature reheat steam pipe 114 through which the steam flowing down in the high-pressure turbine 103 through the exhaust pipe 104 of the high-pressure turbine and supplied to the boiler 101 flows, a first emergency relief pipe 112 including a first emergency relief valve 111 is interconnected.

And, when the back-pressure turbine 107 stops operation by some cause, the extraction steam which flows down in the high-pressure turbine 103 through the first extraction pipe 105 branching from the low-temperature reheat steam pipe 114 and is supplied to the back-pressure turbine 107 is structured so as to open the first emergency relief valve 111 installed in the first emergency relief pipe 112 and flow down into the condenser through the first emergency relief pipe 112.

In the fossil fuel combustion thermal power system including the carbon dioxide separation and capture unit of the first embodiment shown in Fig. 1, the fossil fuel combustion thermal power system 100 and the carbon dioxide separation and capture unit 200 for separating and capturing the carbon dioxide included in the exhaust gas of the boiler discharged from the boiler 101 of the fossil fuel combustion thermal power system 100 by burning fossil fuel are installed.

In the carbon dioxide separation and capture unit 200 shown in Fig. 1, the boiler exhaust gas including carbon dioxide which is discharged from the boiler 101 and is branched and supplied from a boiler exhaust gas system pipe 171 flows down through a boiler exhaust gas pipe 140, is boosted by a boiler exhaust gas boost fan 141 installed in the boiler exhaust gas pipe 140, then is supplied to and cooled by a boiler exhaust gas cooler 142, and is supplied to an absorption tower 126 for absorbing carbon dioxide gas from the boiler exhaust gas cooler 142 by the absorbing solution.

The carbon dioxide gas included in the boiler exhaust gas is absorbed by the absorbing solution in the absorption tower 126 and the processed gas which is boiler exhaust gas including no carbon dioxide is supplied to a chimney 146 from the absorption tower 126 through an exit boiler exhaust gas pipe 145 of the absorption tower and is discharged from the chimney 146 into the atmosphere.

Further, among the boiler exhaust gas including carbon dioxide supplied from the boiler 101 through the boiler exhaust gas system pipe 171, the boiler exhaust gas not supplied to the absorption tower 126, by a valve opening operation of a bypass butterfly valve 143 installed on a bypass gas pipe 144 for bypassing the carbon dioxide separation and capture unit 200, is directly led to the chimney 146 through the bypass gas pipe 144.

The enriched absorbing solution absorbing carbon dioxide gas included in the boiler exhaust gas supplied from the boiler 101 in the absorption tower 126 and including much carbon dioxide is boosted by an enriched absorbing solution transfer pump 127 installed in the supply path of the absorbing solution for supplying the absorbing solution of the absorption tower 126 to a reproduction tower 123, is supplied to an absorbing solution heat exchanger 128 similarly installed in the supply path of the absorbing solution, is heated by the absorbing solution heat exchanger 128, and then is supplied to the reproduction tower 123.

The enriched absorbing solution supplied from the absorption tower 126 to the reproduction tower 123 is heated by supplying vapor generated by being heated by the back-pressure turbine exhaust steam supplied to the reboiler 120 and reclaimer 121 as a heat source to the reproduction tower 123 from the reboiler 120 and reclaimer 121 and the carbon oxide gas absorbed by the enriched absorbing solution in the reproduction tower 123 is separated from the enriched absorbing solution.

By heating by the vapor supplied from the reboiler 120, the carbon dioxide separated from the enriched absorbing solution in the reproduction tower 123 is discharged from the reproduction tower 123, though it is cooled by an exit gas cooler 131 installed on the exit side of the reproduction tower 123 and then is supplied to a reflux drum 132 for separating moisture, and the moisture included in the carbon dioxide gas is separated, and only the carbon oxide gas is supplied to and stored in a carbon dioxide liquefying and storing facility (not drawn) from the reflux drum 132 through a carbon dioxide gas exhaust pipe 147.

Further, the moisture separated by the reflux drum 132 is structured so as to be boosted by a reflux drum pump 133 and be returned to the reproduction tower 123.

And, a part of the absorbing solution in the reproduction tower 123 is pulled out through an absorbing solution pull-out pipe 124 in the reproduction tower and is branched and supplied to the reboiler 120 and reclaimer 121 and it is heated by the reboiler 120 to which the back-pressure turbine exhaust steam flowing down through the back-pressure turbine 107 driven by the heating steam extracted from the steam turbine cycle of the fossil fuel combustion thermal power system 100, that is, the extraction steam extracted from the high-pressure turbine 103 is supplied as a heat source.

Further, the reclaimer 121 is a cleaning unit of the absorbing solution for heating the absorbing solution by using the back-pressure turbine exhaust steam flowing down through the back-pressure turbine 107 as a heat source, separating impurities included in the absorbing solution, and discharging them out of the system.

The heating steam necessary to heat the reboiler 120 and reclaimer 121 is obtained by sending the back-pressure turbine exhaust steam flowing down through the back-pressure turbine 107 composing the fossil fuel combustion thermal power system 100 to the reboiler 120 and reclaimer 121 through the back-pressure turbine exhaust pipe 110.

The absorbing solution separating carbon dioxide by heating the absorbing solution in the reproduction tower 123 is boosted by a lean absorbing solution transfer pump 129 installed in the return path of the absorbing solution for returning the absorbing solution from the reproduction tower 123 to the absorption tower 126, is supplied to a lean absorbing solution cooler 130 similarly installed in the return path of the absorbing solution, is cooled by the lean absorbing solution cooler 130, and then is returned to the absorption tower 126, thus the absorbing solution is circulated between the absorption tower 126 and the reproduction tower 123.

And, the system is structured so as to supply the back-pressure turbine exhaust steam flowing down from the back-pressure turbine 107 through the back-pressure turbine exhaust pipe 110 to the reboiler 120 and reclaimer 121 as a heat source, indirectly heat the absorbing solution pulled out from the reproduction tower 123 through the absorbing solution pull-out pipe 124 in the reproduction tower by the reboiler 120, generate clean steam at a desired temperature and pressure, and supply the generated steam to the reproduction tower 123 through a steam pipe 125 at the reboiler exit.

On the exit blast pipe 110 of the back-pressure turbine on the upstream side of the reboiler 120 and reclaimer 121, a reboiler heating steam pressure control valve 134 and a reclaimer heating steam pressure control valve 135 are installed, thus the flow rate of the back-pressure turbine exhaust steam supplied to the reboiler 120 is adjusted so as to control the steam generated by the reboiler 120 to a desired temperature and pressure.

Further, on the downstream side of the reboiler 120 and reclaimer 121, a boiler and a reclaimer heating steam drain pipe 122 for leading the back-pressure turbine exhaust steam which is used by the reboiler 120 and reclaimer 121 as a heat source and is lowered in temperature to the drain capture system of the turbine condensate system are arranged.

Fig. 2 is a partial diagram showing the portion of the fossil fuel combustion thermal power system 100 of the fossil fuel combustion thermal power system including the carbon dioxide separation and capture unit of the first embodiment shown in Fig. 1.

In the fossil fuel combustion thermal power system 100 of this embodiment shown in Fig. 2, the first emergency relief pipe 112 including the first emergency relief valve 111 interconnected to the low-temperature reheat steam pipe 114 through which the steam flowing down from the high-pressure turbine 103 through the exhaust pipe 104 of the high-pressure turbine flows for permitting the steam flowing into the low-temperature reheat steam pipe 114 to bypass the back-pressure turbine 107 and to be discharged to a condenser (not shown) is arranged.

Further, there is a control unit 300 installed and by the turbine control unit 300, the operation of the back-pressure turbine 107 is controlled.

Namely, by an instruction signal of the control unit 300, the opening angle of a first back-pressure turbine control valve 106 is adjusted and the flow rate of steam supplied to the back-pressure turbine 107 is controlled. Further, by the instruction signal of the control unit 300, the opening angle of a back-pressure turbine exhaust pressure regulating valve 109 is adjusted and the pressure of the back-pressure turbine exhaust steam which flows down in the back-pressure turbine 107, flows in the exit blast pipe 110 of the back-pressure turbine on the downstream side of the back-pressure turbine exhaust pressure regulating valve 109, and is supplied to the reboiler 120 is controlled.

On the other hand, when the main unit of the carbon dioxide separation and capture unit 200 trips by some cause, for example, when the enriched absorbing solution transfer pump 127 for transferring the absorbing solution or the lean absorbing solution transfer pump 129 trips and the operation of the carbon dioxide separation and capture unit 200 stops urgently, the surplus steam (in the normal operation, from the back-pressure turbine 107 to the reboiler 120, the back-pressure turbine exhaust steam flowing down in the back-pressure turbine 107 is supplied as a heat source) supplied from the fossil fuel combustion thermal power system 100 to the carbon dioxide separation and capture unit 200 is permitted to bypass the back-pressure turbine 107 and to shift to the condenser through the first emergency relief pipe 112 including the first emergency relief valve 111.

The steam quantity required by the reboiler 120 is far larger than the steam quantity required by the reclaimer 121 and is equivalent to about 15% to 20% of the total quantity of evaporation of the boiler. Therefore, at the time of urgent stop of the carbon dioxide separation and capture unit 200, in response to an urgent reduction of the steam quantity supplied to the reboiler 120, the urgent relief system composed of the first emergency relief pipe 112 including the first emergency relief valve 111 for permitting the surplus steam to flow down into the condenser can effectively fulfill the surplus steam urgent relief function.

In the fossil fuel combustion thermal power system 100 shown in Fig. 2, the control unit 300 for controlling the operation of the back-pressure turbine 107 and the operation of the first emergency relief valve 111 installed in the first emergency relief pipe 112 for shifting the surplus steam to the condenser at the time of urgent stop of the carbon dioxide separation and capture unit 200 is installed.

And, when the enriched absorbing solution transfer pump 127 which is a main unit of the carbon dioxide separation and capture unit 200 or the lean absorbing solution transfer pump 129 trips, and the operation of the carbon dioxide separation and capture unit 200 stops urgently, and the steam supplied from the steam turbine cycle of the fossil fuel combustion thermal power system 100 to the reboiler 120 is required to stop immediately, on the basis of a trip signal 127a of the enriched absorbing solution transfer pump 127 or a trip signal 129a of the lean absorbing solution transfer pump 129 which are input from the sensors respectively installed in the enriched absorbing solution transfer pump 127 and the lean absorbing solution transfer pump 129, the urgent stop of the carbon dioxide separation and capture unit 200 is detected by the control unit 300, and to stop the operation of the back-pressure turbine 107, the first back-pressure turbine control valve 106 installed on the entrance side of the back-pressure turbine 107 is completely closed by the instruction signal from the control unit 300, and the steam flowing into the back-pressure turbine 107 is interrupted.

And, simultaneously, by the instruction signal from the control unit 300, the first emergency relief valve 111 is opened, and the surplus steam flowing in the back-pressure turbine 107 through the low-temperature reheat steam pipe 114 is switched so as to bypass the back-pressure turbine 107 through the first emergency relief pipe 112 interconnected to the low-temperature reheat steam pipe 114 and flow down into the condenser.

The aforementioned control operation is performed under the control of the control unit 300, thus the load change of the boiler 101 and steam turbine due to the surplus steam caused by the urgent stop of the carbon dioxide separation and capture unit 200 is suppressed, so that even at the time of urgent stop of the carbon dioxide separation and capture unit 200, the stable operation of the fossil fuel combustion thermal power system 100 can be continued.

The surplus steam flowing down to the condenser, thereafter, is operated so as to adjust the opening angle of the first emergency relief valve 111 and decrease the flow rate.

Thereafter, in accordance with the flow rate reduction operation of the surplus steam flowing down to the condenser via the first emergency relief pipe 112 by the control unit 300, an operation of reducing the quantity of evaporation of the vapor generated in the boiler 101 in response to the reduction in the steam quantity supplied to the reboiler 120 of the carbon dioxide separation and capture unit 200 from the fossil fuel combustion thermal power system 100 is also transferred.

On the other hand, the fossil fuel combustion thermal power system 100 and the carbon dioxide separation and capture unit 200 are generally installed away from each other, so that the length of the exit blast pipe 110 of the back-pressure turbine for supplying the back-pressure turbine exhaust steam of the back-pressure turbine 107 to the reboiler 120 is increased. Further, the steam quantity of the back-pressure turbine exhaust steam is large and the pipe aperture is also large, so that the storage of steam in the exit blast pipe 110 of the back-pressure turbine cannot be ignored.

Therefore, in this embodiment, at the position of the exit blast pipe 110 of the back-pressure turbine on the upstream side in the vicinity of the reboiler 120 or reclaimer 121 of the carbon dioxide separation and capture unit 200, the reboiler entrance pressure regulating valve 134 and reclaimer entrance pressure regulating valve 135 are respectively installed on the exit blast pipe 110 of the back-pressure turbine, and can thereby respond by adjusting the opening angles of the reboiler entrance pressure regulating valve 134 and reclaimer entrance pressure regulating valve 135 by a control signal from the control unit 300.

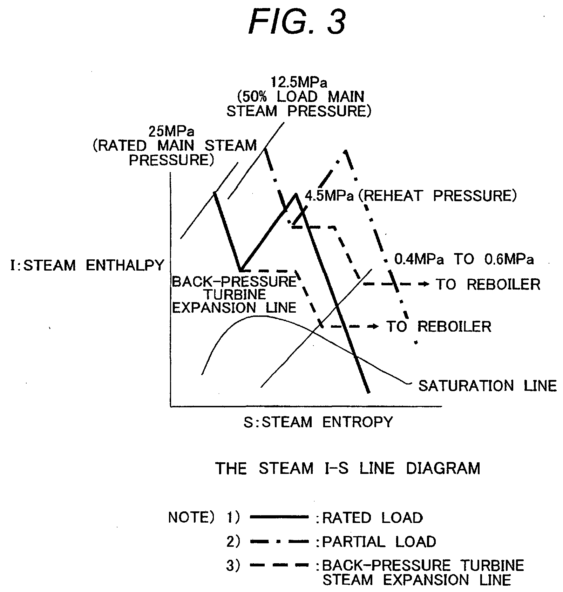

Fig. 3, with respect to the steam turbine including the high-pressure steam turbine 103, intermediate-pressure turbine 116, and low-pressure turbine 118 composing the fossil fuel combustion thermal power system including the carbon dioxide separation and capture unit of the first embodiment of the present invention, shows the steam I-S line diagram (steam enthalpy I - steam entropy S line diagram), wherein the turbine steam expansion lines indicating respectively the expansion line at the rated load of a load of 100% with a thick solid line and the expansion line at the partial load of a load of 50% with a thick alternate long and short dash line and the expansion lines indicating respectively those at the rated load and partial load of the back-pressure turbine 107 with thick dashed lines are described.

As shown in the steam I-S line diagram in Fig. 3, for the extraction steam supplied to the back-pressure turbine 107 through the first extraction pipe 105 branched from the low-temperature reheat steam pipe 114 through which the steam flowing down in the high-pressure turbine 103 of the steam turbine and supplied to the boiler 101 flows, the flow rate thereof is adjusted by the operation of the first back-pressure turbine control valve 106, thus the output of the back-pressure turbine 107 is controlled.

And, the exhaust pressure of the back-pressure turbine 107 is set to a pressure of about 0.5 MPa which is necessary to generate vapor at a desired temperature and pressure by the reboiler 120 installed in the carbon dioxide separation and capture unit 200 in consideration of a pressure loss of about 0.1 MPa by the pipe and valve, thus the pressure of the back-pressure turbine exhaust steam is adjusted to about 0.6 MPa.

The locus of the expansion line of the back-pressure turbine 107 under this condition is indicated by a thick dashed line in the steam I-S line diagram shown in Fig. 3.

The steam expanding and working in the back-pressure turbine 107 and flowing down in the back-pressure turbine 107 passes through the back-pressure turbine exhaust pipe 108 and the back-pressure turbine exhaust pressure regulating valve 109 and is supplied to the reboiler 120 or reclaimer 121 of the carbon dioxide separation and capture unit 200 as a heat source through the back-pressure turbine exhaust pipe 110.

And, in the fossil fuel combustion thermal power system including the carbon dioxide separation and capture unit of the first embodiment, as shown in the steam I-S line diagram in Fig. 3, if the steam turbine transfers from the rated main steam pressure (25 MPa) of the rated load operation, for example, to the partial load operation of a load of 50%, the main steam pressure is reduced from the rated main steam pressure (25 MPa) to the 50%-load steam pressure (12.5 MPa), though the main steam temperature is kept almost constant even if the rated load operation is changed to the partial load operation.

In correspondence with the reduction in the main steam pressure aforementioned, the pressure of the steam which flows down in the high-pressure turbine 103 through the high-pressure turbine exhaust pipe 104 in the partial load operation and is supplied to the low-temperature reheat steam pipe 114 lowers, though the steam supplied to the low-temperature reheat steam pipe 114 shows the situation that the steam under the condition of a pressure of about 0.5 MPa and a temperature of about 170°C required by the reboiler 120 of the carbon dioxide separation and capture unit 200 to generate steam is sufficiently ensured.

Simultaneously, the steam flowing down in the exit blast pipe 110 of the back-pressure turbine from the low-temperature reheat steam pipe 114 via the back-pressure turbine 107 and reaching the reboiler 120 is sufficiently away from the steam saturation line indicated by a thin line on the lower part of Fig. 3 and the situation that the fault that the steam is drained during flowing from the back-pressure turbine 107 to the exit blast pipe 110 of the back-pressure turbine is avoided is indicated.

According to the embodiment of the present invention aforementioned, when the carbon dioxide separation and capture unit stops urgently, a fossil fuel combustion thermal power system including a carbon dioxide separation and capture unit capable of suppressing the load change of the fossil fuel combustion thermal power system can be realized.

### (Embodiment 2)

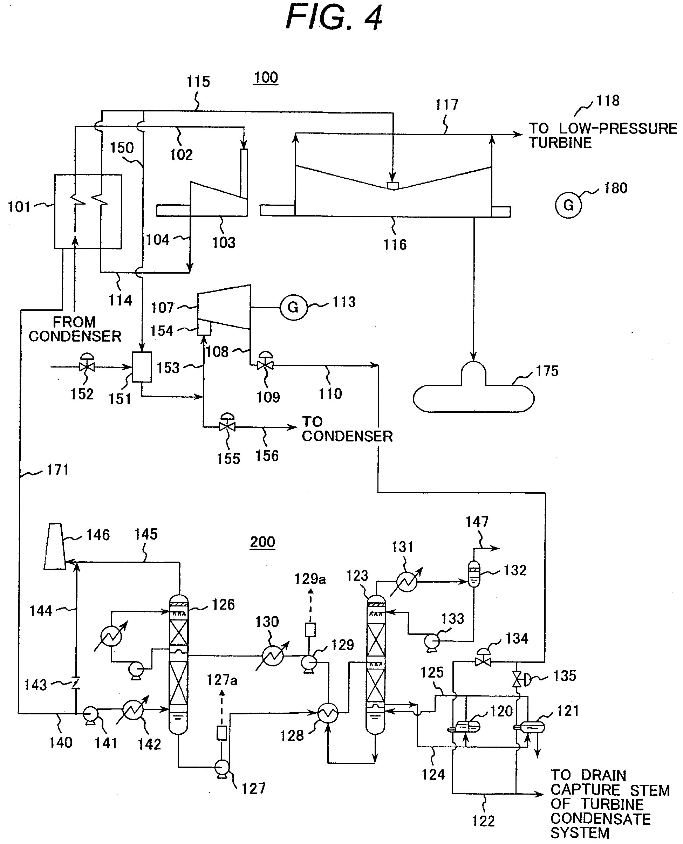

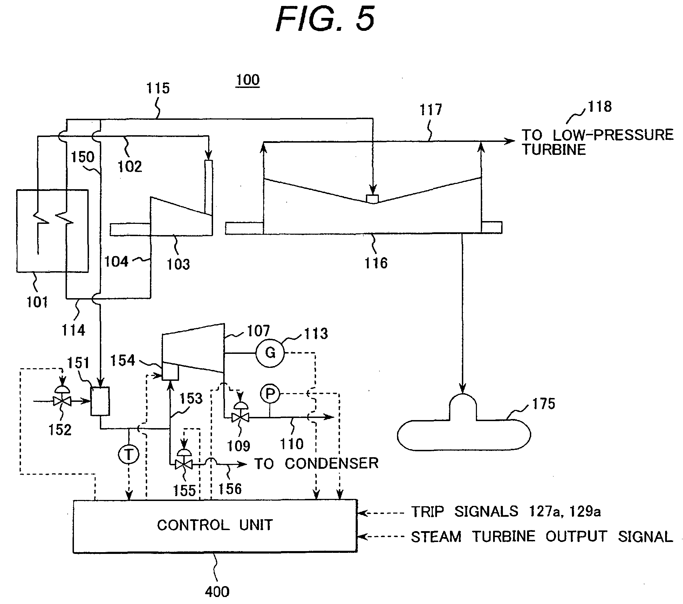

The fossil fuel combustion thermal power system including the carbon dioxide separation and capture unit of the second embodiment of the present invention will be explained by referring to Figs. 4 and 5.

The fossil fuel combustion thermal power system including the carbon dioxide separation and capture unit of the second embodiment which is this embodiment is common in the basic constitution to the fossil fuel combustion thermal power system including the carbon dioxide separation and capture unit of the first embodiment explained previously. Therefore, the explanation of the constitution common to the two is omitted and only the different portions will be explained below.

The fossil fuel combustion thermal power system including the carbon dioxide separation and capture unit of the second embodiment shown in Fig. 4 includes the fossil fuel combustion thermal power system 100 composing the steam turbine heat cycle and the carbon dioxide separation and capture unit 200 for separating and capturing carbon dioxide from the boiler exhaust gas.

The fossil fuel combustion thermal power system 100 is structured so as to extract a part of high-temperature reheat steam through a high-temperature reheat steam extraction pipe 150 branching from the middle of the high-temperature reheat steam pipe 115 for supplying the high-temperature reheat steam from the boiler 101 to the intermediate-pressure turbine 116 and supply the extracted high-temperature reheat steam to a high-temperature reheat steam extraction temperature lowering unit 151.

In the high-temperature reheat steam extraction temperature lowering unit 151, separately, the high-temperature reheat steam is lowered in temperature by cold water led via a high-temperature reheat steam extraction temperature lowering unit spray valve 152, then is supplied through a second extraction pipe 153 arranged on the exit side of the temperature lowering unit 151, and is introduced to the back-pressure turbine 107 from a second back-pressure turbine control valve 154.

The reheat steam introduced to the back-pressure turbine 107 through the high-temperature reheat steam extraction pipe 150 expands and works in the back-pressure turbine 107 and contributes to power generation. And, the steam after flowing down in the back-pressure turbine 107 is structured so as to pass through the back-pressure turbine exhaust pipe path 108 and the back-pressure turbine exhaust pressure regulating valve 109 from the back-pressure turbine 107 and to be supplied to the reboiler 120 or reclaimer 121 installed in the carbon dioxide separation and capture unit 200 as a heat source through the back-pressure turbine exhaust pipe 110.

On the other hand, in the fossil fuel combustion thermal power system 100, if the steam turbine transfers to an operation of reducing the load from the rated load operation to the partial load operation, even though the high-temperature reheat steam pressure of the reheat steam supplied to the intermediate-pressure turbine 116 from the boiler 101 through the high-temperature reheat steam pipe 115 is reduced, the high-temperature reheat steam temperature is kept almost constant even if the rated load operation is changed to the partial load operation.

And, when the steam turbine of the fossil fuel combustion thermal power system 100 is transferred from the rated load operation to the partial load operation, a part of the high-temperature reheat steam supplied from the boiler 101 to the intermediate-pressure turbine 116 is branched from the high-temperature reheat steam pipe 115 and is supplied to the high-temperature reheat steam extraction temperature lowering unit 151 through the high-temperature reheat steam extraction pipe 150.

And, the high-temperature reheat steam extraction temperature lowering unit 151 is structured so as to separately lower the temperature of the high-temperature reheat steam by cold water led from the high-temperature reheat steam extraction temperature lowering unit spray valve 152 down to the temperature required by the reboiler 120 or reclaimer 121 of the carbon dioxide separation and capture unit 200 as a heat source which will be described later and to introduce the reheat steam lowered in temperature to the back-pressure turbine 107 via the second extraction pipe 153 and second back-pressure turbine control valve 154.

Further, that the system is structured so as to supply the back-pressure turbine exhaust steam flowing down from the back-pressure turbine 107 to the reboiler 120 and reclaimer 121 installed in the carbon dioxide separation and capture unit 200 as a heat source, indirectly heat the absorbing solution pulled out from the reproduction tower 123 through the absorbing solution pull-out pipe 124 in the reproduction tower by the reboiler 120 and reclaimer 121, generate clean steam at a desired temperature and pressure, and supply the generated steam to the reproduction tower 123 through the steam pipe 125 at the reboiler exit is similar to the fossil fuel combustion thermal power system including the carbon dioxide separation and capture unit of the first embodiment, so the explanation of the carbon dioxide separation and capture unit 200 will be omitted.

Fig. 5 is a partial diagram showing the portion of the fossil fuel combustion thermal power system 100 of the fossil fuel combustion thermal power system including the carbon dioxide separation and capture unit of the second embodiment shown in Fig. 4.

In the fossil fuel combustion thermal power system 100 of this embodiment shown in Fig. 5, a second emergency relief pipe 156 including a second emergency relief valve 155 interconnected to the second extraction pipe 153 for permitting the steam flowing in the second extraction pipe 153 to bypass the back-pressure turbine 107 and discharge it to a condenser (not drawn) is arranged.

In the fossil fuel combustion thermal power system including the carbon dioxide separation and capture unit having the aforementioned constitution, the high-temperature reheat steam can be supplied to the reboiler 120 of the carbon dioxide separation and capture unit, so that the temperature of the absorbing solution in the reproduction tower 123 can be raised higher.

When the main unit of the carbon dioxide separation and capture unit 200 trips from some cause, for example, when the enriched absorbing solution transfer pump 127 for transferring the absorbing solution or the lean absorbing solution transfer pump 129 trips and the operation of the carbon dioxide separation and capture unit 200 stops urgently, the surplus steam (in the normal operation, from the back-pressure turbine 107 to the reboiler 120, the back-pressure turbine exhaust steam flowing down in the back-pressure turbine 107 is supplied as a heat source) supplied from the fossil fuel combustion thermal power system 100 to the carbon dioxide separation and capture unit 200 is permitted to bypass the back-pressure turbine 107 and to shift to the condenser through the second emergency relief pipe 156 including the second emergency relief valve 155.

In the fossil fuel combustion thermal power system 100 shown in Fig. 5, a control unit 400 for controlling the operation of the back-pressure turbine 107 and the operation of the second emergency relief valve 155 installed in the second emergency relief pipe 156 for shifting the surplus steam to the condenser at the time of an urgent stop of the carbon dioxide separation and capture unit 200 is installed.

And, when the enriched absorbing solution transfer pump 127 or the lean absorbing solution transfer pump 129 which are main units of the carbon dioxide separation and capture unit 200 trips, and the operation of the carbon dioxide separation and capture unit 200 stops urgently, and the steam supplied from the steam turbine cycle of the fossil fuel combustion thermal power system 100 to the reboiler 120 is required to stop immediately, on the basis of a trip signal 127a of the enriched absorbing solution transfer pump 127 or a trip signal 129a of the lean absorbing solution transfer pump 129 which are input from the sensors respectively installed in the enriched absorbing solution transfer pump 127 and the lean absorbing solution transfer pump 129, the urgent stop of the carbon dioxide separation and capture unit 200 is detected by the control unit 400, and to stop the operation of the back-pressure turbine 107, the second back-pressure turbine control valve 154 installed on the entrance side of the back-pressure turbine 107 is completely closed by the instruction signal from the control unit 400, and the steam flowing into the back-pressure turbine 107 is interrupted.

And, simultaneously, by the instruction signal from the control unit 400, the second emergency relief valve 155 is opened, and the surplus steam flowing in the back-pressure turbine 107 through the second extraction pipe 153 is switched so as to bypass the back-pressure turbine 107 through the second emergency relief pipe 156 interconnected to the second extraction pipe 153 and flow down into the condenser.

The aforementioned control operation is performed under the control of the control unit 400, thus the load change of the boiler 101 and steam turbine due to the surplus steam caused by the urgent stop of the carbon dioxide separation and capture unit 200 is suppressed, so that even at the time of urgent stop of the carbon dioxide separation and capture unit 200, the stable operation of the fossil fuel combustion thermal power system 100 can be continued.

The surplus steam flowing down to the condenser, thereafter, is operated so as to adjust the opening angle of the second emergency relief valve 155 and decrease the flow rate.

Thereafter, in accordance with the flow rate reduction operation of the surplus steam flowing down to the condenser via the second emergency relief pipe 156 by the control unit 400, an operation of reducing the quantity of evaporation of the vapor generated in the boiler 101 in response to the reduction in the steam quantity supplied to the reboiler 120 of the carbon dioxide separation and capture unit 200 from the fossil fuel combustion thermal power system 100 is also transferred.

According to the embodiment of the present invention aforementioned, when the carbon dioxide separation and capture unit stops urgently, a fossil fuel combustion thermal power system including a carbon dioxide separation and capture unit capable of suppressing the load change of the fossil fuel combustion thermal power system can be realized.

### (Embodiment 3)

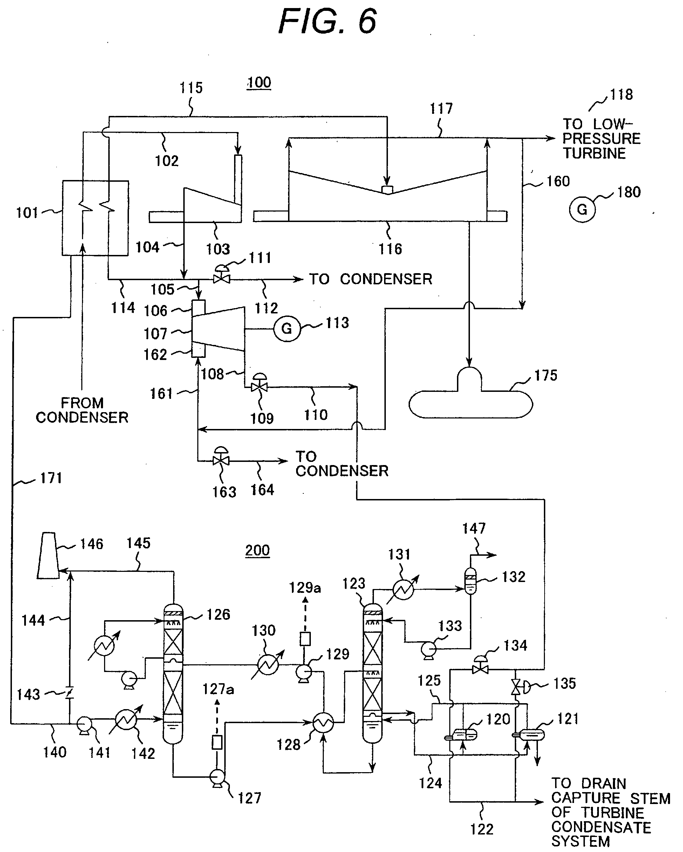

The fossil fuel combustion thermal power system including the carbon dioxide separation and capture unit of the third embodiment of the present invention will be explained by referring to Fig. 6.

The fossil fuel combustion thermal power system including the carbon dioxide separation and capture unit of the third embodiment which is this embodiment is common in the basic constitution to the fossil fuel combustion thermal power system including the carbon dioxide separation and capture unit of the first embodiment explained previously. Therefore, the explanation of the constitution common to the two is omitted and only the different portions will be explained below.

The fossil fuel combustion thermal power system including the carbon dioxide separation and capture unit shown in Fig. 6 includes the fossil fuel combustion thermal power system 100 composing the steam turbine heat cycle and the carbon dioxide separation and capture unit 200 for separating and capturing carbon dioxide from the boiler exhaust gas.

In the fossil fuel combustion thermal power system 100, the first extraction pipe 105 branching from the low-temperature reheat steam pipe 114 for supplying the steam flowing down through the high-temperature turbine exhaust pipe 104 of the high-pressure turbine 103 to the boiler 101 for extracting a part of the steam flowing down through the low-temperature reheat steam pipe 114 in order to drive the back-pressure turbine and the back-pressure turbine 107 driven by the steam extracted through the first extraction pipe 105 are installed and on the entrance side of the back-pressure turbine 107, the back-pressure turbine control valve 106 for controlling the output of the back-pressure turbine 107 is installed.

Furthermore, the system is structured so that a part of the steam which flows down through the intermediate-pressure turbine 116 and is supplied from the intermediate-pressure turbine exhaust pipe 117 to the low-temperature turbine 118 (not drawn) is extracted through a intermediate-pressure turbine exhaust portion extraction pipe 160 and the extracted steam through a third extraction pipe 161 at the entrance of the back-pressure turbine interconnected to the intermediate-pressure turbine exhaust portion extraction pipe 160 is introduced to the back-pressure turbine 107 via a second back-pressure turbine control valve 162 installed on the entrance side of the back-pressure turbine 107.

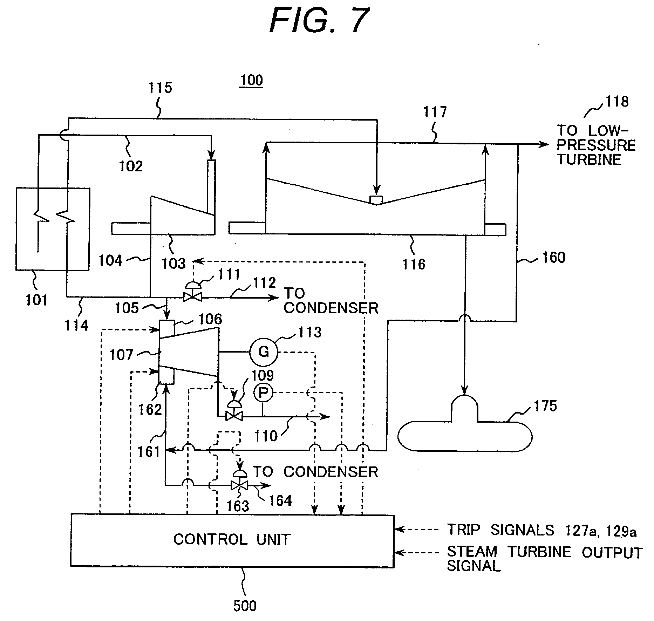

In the fossil fuel combustion thermal power system 100 of this embodiment shown in Fig. 7, the first emergency relief pipe 112 including the first emergency relief valve 111 interconnected to the low-temperature reheat steam pipe 114 through which the steam flowing down from the high-pressure turbine 103 through the exhaust pipe 104 of the high-pressure turbine flows for permitting the steam flowing into the low-temperature reheat steam pipe 114 to bypass the back-pressure turbine 107 and to be discharged to a condenser (not shown) is arranged.

Furthermore, in the third extraction pipe 161 at the entrance of the back-pressure turbine, a third emergency relief pipe 164 for shifting the extraction steam flowing down in the third extraction pipe 161 at the entrance of the back-pressure turbine to the condenser is arranged and a third emergency relief valve 163 for controlling the down-flow of the steam is arranged on the third emergency relief pipe 164.

Further, the carbon dioxide separation and capture unit 200 is similar to that of the first embodiment, so the explanation is omitted.

In the fossil fuel combustion thermal power system 100, when the steam turbine transfers from the rated load operation to the partial load operation, the steam pressure of the exhaust steam of the intermediate-pressure turbine 116 is reduced, so that a system of extracting steam from the intermediate-pressure turbine exhaust pipe 117 and supplying the intermediate-pressure turbine exhaust steam to the back-pressure turbine 107 through the intermediate-pressure turbine exhaust portion extraction pipe 160, the third extraction pipe 161 at the entrance of the back-pressure turbine, and the second back-pressure turbine control valve 162 is switched, and a system of supplying the high-pressure steam flowing down into the low-temperature reheat steam pipe 114 from the high-pressure turbine 103 to the back-pressure turbine 107 through the first extraction pipe 105 and the back-pressure turbine control valve 106 is switched, thus the steam pressure necessary to drive the back-pressure turbine 107 is ensured.

In the fossil fuel combustion thermal power system including the carbon dioxide separation and capture unit having the aforementioned constitution, during the rated load operation, the exhaust steam of the intermediate-pressure turbine 116 can be supplied to the back-pressure turbine 107, so that compared with the constitution of supplying only the exhaust steam of the high-pressure turbine 103 to the back-pressure turbine 107, the output reduction of the steam turbine can be suppressed effectively.

When the main unit of the carbon dioxide separation and capture unit 200 trips from some causes, for example, when the enriched absorbing solution transfer pump 127 or the lean absorbing solution transfer pump 129 for transferring the absorbing solution trips and the operation of the carbon dioxide separation and capture unit 200 stops urgently, the surplus steam (in the normal operation, from the back-pressure turbine 107 to the reboiler 120, the back-pressure turbine exhaust steam flowing down in the back-pressure turbine 107 is supplied as a heat source) supplied from the fossil fuel combustion thermal power system 100 to the carbon dioxide separation and capture unit 200 is permitted to bypass the back-pressure turbine 107 and to shift to the condenser through the first emergency relief pipe 112 including the first emergency relief valve 111 or to shift to the condenser through the third emergency relief pipe 164 including the third emergency relief valve 163.

In the fossil fuel combustion thermal power system 100 shown in Fig. 7, a control unit 500 for controlling the operation of the back-pressure turbine 107, the operation of the first emergency relief valve 111 installed in the first emergency relief pipe 112 for shifting the surplus steam to the condenser at the time of an urgent stop of the carbon dioxide separation and capture unit 200, and the operation of the third emergency relief valve 163 installed in the third emergency relief pipe 164 is installed.

And, when the enriched absorbing solution transfer pump 127 or the lean absorbing solution transfer pump 129 which are main units of the carbon dioxide separation and capture unit 200 trips, and the operation of the carbon dioxide separation and capture unit 200 stops urgently, and the steam supplied from the steam turbine cycle of the fossil fuel combustion thermal power system 100 to the reboiler 120 is required to stop immediately, on the basis of a trip signal 127a of the enriched absorbing solution transfer pump 127 or a trip signal 129a of the lean absorbing solution transfer pump 129 which are input from the sensors respectively installed in the enriched absorbing solution transfer pump 127 and the lean absorbing solution transfer pump 129, the urgent stop of the carbon dioxide separation and capture unit 200 is detected by the control unit 500, and to stop the operation of the back-pressure turbine 107, the first back-pressure turbine control valve 106 installed on the entrance side of the back-pressure turbine 107 is completely closed by the instruction signal from the control unit 500, and the steam flowing into the back-pressure turbine 107 is interrupted.

And, simultaneously, when the steam turbine of the fossil fuel combustion thermal power system 100 is in the rated load operation, by the instruction signal from the control unit 500, the third emergency relief valve 163 is opened, and the surplus steam flowing in the back-pressure turbine 107 through the intermediate-pressure turbine exhaust portion extraction pipe 160 is switched so as to bypass the back-pressure turbine 107 through the third emergency relief pipe 164 interconnected to the intermediate-pressure turbine exhaust portion extraction pipe 160 and flow down into the condenser.

Further, when the steam turbine of the fossil fuel combustion thermal power system 100 is in the partial load operation, by the instruction signal from the control unit 500, the first emergency relief valve 111 is opened, and the surplus steam flowing in the back-pressure turbine 107 through the low-temperature reheat steam pipe 114 is switched so as to bypass the back-pressure turbine 107 through the first emergency relief pipe 112 interconnected to the low-temperature reheat steam pipe 114 and flow down into the condenser.

The aforementioned control operation is performed under the control of the control unit 500, thus the load change of the boiler 101 and steam turbine due to the surplus steam caused by the urgent stop of the carbon dioxide separation and capture unit 200 is suppressed, so that even at the time of urgent stop of the carbon dioxide separation and capture unit 200, the stable operation of the fossil fuel combustion thermal power system 100 can be continued.

The surplus steam flowing down to the condenser, thereafter, is operated so as to adjust the opening angle of the first emergency relief valve 111 or the third emergency relief valve 163 and decrease the flow rate.

Thereafter, in accordance with the flow rate reduction operation of the surplus steam flowing down to the condenser via the first emergency relief pipe 112 or the third emergency relief pipe 164 by the control unit 500, an operation of reducing the quantity of evaporation of the vapor generated in the boiler 101 in response to the reduction in the steam quantity supplied to the reboiler 120 of the carbon dioxide separation and capture unit 200 from the fossil fuel combustion thermal power system 100 is also transferred.

Also by the embodiment of the present invention aforementioned, even when the carbon dioxide separation and capture unit stops urgently from some cause, a fossil fuel combustion thermal power system including a carbon dioxide separation and capture unit capable of suppressing the load change of the fossil fuel combustion thermal power system can be realized.

According to the embodiment of the present invention aforementioned, when the carbon dioxide separation and capture unit stops urgently, a fossil fuel combustion thermal power system including a carbon dioxide separation and capture unit capable of suppressing the load change of the fossil fuel combustion thermal power system can be realized.

### (Embodiment 4)

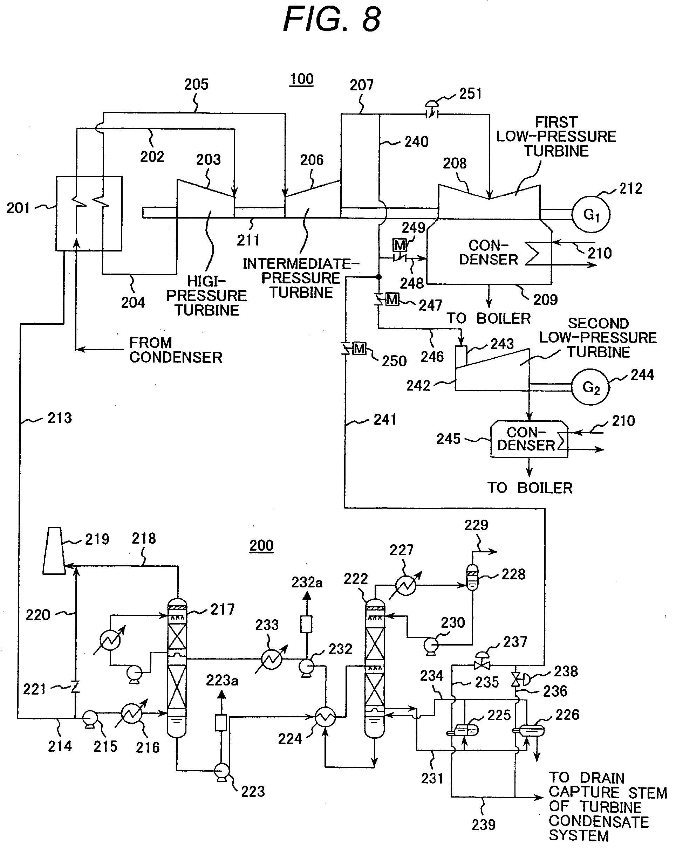

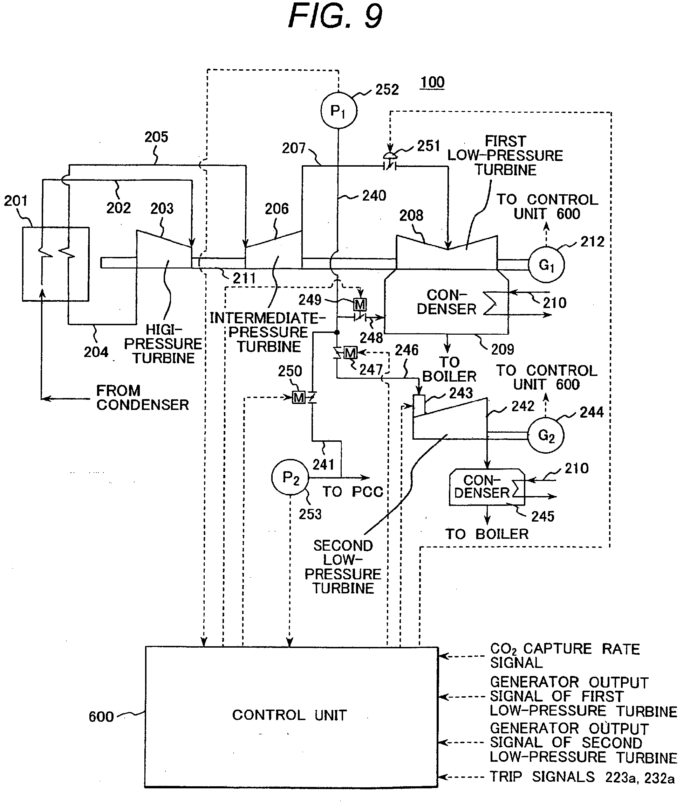

The fossil fuel combustion thermal power system including the carbon dioxide separation and capture unit of the fourth embodiment of the present invention will be explained by referring to Figs. 8 and 9.

Fig. 8 shows the fossil fuel combustion thermal power system including the carbon dioxide separation and capture unit of the fourth embodiment of the present invention.

The fossil fuel combustion thermal power system 100 composing the fossil fuel combustion thermal power system including the carbon dioxide separation and capture unit of the fourth embodiment shown in Fig. 8 includes a fossil fuel combustion boiler 201 for burning fossil fuel, heating condensed water supplied from the condenser, and generating steam at high temperature and high pressure and a high-pressure turbine 203 for leading and driving the steam generated by the boiler 201 through a main steam pipe 202 from the boiler 201.

The steam decompressed due to an occurrence of power by the high-pressure turbine 203 for flowing down through an exhaust pipe 204 of the high-pressure turbine is supplied to the boiler 201 and is heated again by the boiler 201 to reheat the steam.

The fossil fuel combustion thermal power system 100 includes an intermediate-pressure turbine 206 for leading and driving the reheat steam heated by the boiler 201 through a high-temperature reheat steam pipe 205 from the boiler 201, a first low-pressure turbine 208 for leading and driving the steam decompressed due to an occurrence of power by the intermediate-pressure turbine 206 through a intermediate-pressure turbine exhaust pipe 207, and a first condenser 209 for condensing the steam decompressed due to an occurrence of power by the first low-pressure turbine 208.

The first condenser 209 includes a cooling water pipe 210 and exchanges heat between the steam led to the condenser 209 and the cooling water flowing in the cooling water pipe, and thereby condenses the steam. The steam turbine heat cycle is structured so as to re-send the condensed water condensed by the condenser 209 to the boiler 201, change it to steam, and send the steam to the high-pressure turbine 203.

The high-pressure turbine 203, the intermediate-pressure turbine 206, and the low-pressure turbine 208 are connected by a turbine rotor 211. Further, to the turbine rotor 211, a generator 212 is connected and by the rotary power of the high-pressure turbine 203, the intermediate-pressure turbine 206, and the low-pressure turbine 208, the generator 212 is driven and the output of the steam turbine is taken out as electric power.

In the fossil fuel combustion thermal power system 100, a first extraction pipe 240 for extracting and leading a part of the exhaust steam branching from the intermediate-pressure turbine exhaust pipe 207 of the intermediate-pressure turbine 206 and flowing down in the intermediate-pressure turbine exhaust pipe 207 and a PCC unit blast pipe 241 connected to the first extraction pipe 240 for sending the extraction steam flowing down in the first extraction pipe 240 to a reboiler 225 and a reclaimer 226 which are installed in the carbon dioxide separation and capture unit 200 which will be described later are installed. In the PCC unit blast pipe 241, a stop valve 250 is installed.

In the fossil fuel combustion thermal power system including the carbon dioxide separation and capture unit of the fourth embodiment shown in Fig. 8, the fossil fuel combustion thermal power system 100 and the carbon dioxide separation and capture unit 200 (PCC unit) for separating and capturing the carbon dioxide included in the exhaust gas of the boiler discharged from the boiler 201 of the fossil fuel combustion thermal power system 100 by burning fossil fuel are installed.

In the carbon dioxide separation and capture unit 200 shown in Fig. 8, the boiler exhaust gas including carbon dioxide which is discharged from the boiler 201 and is branched and supplied from a boiler exhaust gas system pipe 213 flows down through a boiler exhaust gas pipe 214, is boosted by a boiler exhaust gas boost fan 215 installed in the boiler exhaust gas pipe 214, then is supplied to and cooled by a boiler exhaust gas cooler 216, and is supplied to an absorption tower 217 for absorbing carbon dioxide gas from the boiler exhaust gas cooler 216 by the absorbing solution.

The carbon dioxide gas included in the boiler exhaust gas is absorbed by the absorbing solution in the absorption tower 217 and the processed gas which is boiler exhaust gas including no carbon dioxide is supplied to a chimney 219 from the absorption tower 217 through an exit boiler exhaust gas pipe 218 of the absorption tower and is discharged from the chimney 219 into the atmosphere.

Further, among the boiler exhaust gas including carbon dioxide supplied from the boiler 201 through the boiler exhaust gas system pipe 213, the boiler exhaust gas not supplied to the absorption tower 217, by a valve opening operation of a bypass butterfly valve 221 installed on a bypass gas pipe 220 for bypassing the carbon dioxide separation and capture unit 200, is directly led to the chimney 219 through the bypass gas pipe 220.

The enriched absorbing solution absorbing carbon dioxide gas included in the boiler exhaust gas in the absorption tower 217 and including much carbon dioxide is boosted by an enriched absorbing solution transfer pump 223 installed in the supply path of the absorbing solution for supplying the absorbing solution of the absorption tower 217 to a reproduction tower 222, is supplied to an absorbing solution heat exchanger 224 similarly installed in the supply path of the absorbing solution, is heated by the absorbing solution heat exchanger 224, and then is supplied to the reproduction tower 222.

The enriched absorbing solution supplied from the absorption tower 217 to the reproduction tower 222 is heated by supplying vapor generated by the reboiler 225 and reclaimer 226 to the reproduction tower 222 from the reboiler 225 and reclaimer 226 and the carbon dioxide gas absorbed in the reproduction tower 222 is separated.

By heating by the vapor supplied from the reboiler 225, the carbon dioxide separated from the enriched absorbing solution in the reproduction tower 222 is discharged from the reproduction tower 222, is cooled by an exit gas cooler 227 installed on the exit side of the reproduction tower 222, and then is supplied to a reflux drum 228 for separating moisture, and the moisture included in the carbon dioxide gas is separated. The carbon dioxide gas with the moisture separated is supplied to and stored in a carbon dioxide liquefying and storing facility (not drawn) from the reflux drum 228 through a carbon dioxide gas exhaust pipe 229.

Further, the moisture separated by the reflux drum 228 is structured so as to be boosted by a reflux drum pump 230 and be returned to the reproduction tower 222.

And, a part of the absorbing solution in the reproduction tower 222 is pulled out through an absorbing solution pull-out pipe 231 in the reproduction tower and is branched and supplied to the reboiler 225 and reclaimer 226 and it is heated by the reboiler 225 supplied with the heating steam extracted from the steam turbine cycle of the fossil fuel combustion thermal power system 100, that is, the extraction steam extracted from the intermediate-pressure turbine 206 as a heat source.

The reclaimer 226 is a cleaning unit of the absorbing solution for heating the absorbing solution using the extraction steam extracted from the intermediate-pressure turbine 206 as a heat source, separating impurities included in the absorbing solution, and discharging them out of the system.

The heating steam necessary to heat the reboiler 225 and reclaimer 226 is obtained by extracting a part of the extraction steam flowing down in the intermediate-pressure turbine 206 composing the fossil fuel combustion thermal power system 100 and sending it to the reboiler 225 and reclaimer 226 through the first extraction pipe 240 and the PCC unit blast pipe 241.

The absorbing solution separating carbon dioxide by heating the absorbing solution in the reproduction tower 222 is boosted by a lean absorbing solution transfer pump 232 installed in the return path of the absorbing solution for returning the absorbing solution from the reproduction tower 222 to the absorption tower 217, is supplied to a lean absorbing solution cooler 233 similarly installed in the return path of the absorbing solution, is cooled by the lean absorbing solution cooler 233, and then is returned to the absorption tower 217, thus the absorbing solution is circulated between the absorption tower 217 and the reproduction tower 222.

And, the carbon dioxide separation and capture unit 200 is structured so as to supply the extraction steam extracted from the intermediate-pressure turbine 206 through the first extraction pipe 240 and the PCC unit blast pipe 241 to the reboiler 225 and reclaimer 226 as a heat source, indirectly heat the absorbing solution pulled out from the reproduction tower 222 through the absorbing solution pull-out pipe 231 in the reproduction tower by the reboiler 225, thereby generating normal steam at a desired temperature and pressure, and supply the generated steam to the reproduction tower 222 through a steam pipe 234 at the reboiler exit.

The PCC unit blast pipe 241 on the upstream side of the reboiler 225 and reclaimer 226 branches to a reboiler-side pipe 235 and a reclaimer-side pipe 236, and the reboiler-side pipe 235 is connected to the reboiler 225, and the reclaimer-side pipe 236 is connected to the reclaimer 226. Further, on the reboiler-side pipe 234, a flow rate control valve 237 is installed, and on the reclaimer-side pipe 235, a flow rate control valve 238 is installed, and so the steam generated by the reboiler 225 is controlled to a desired temperature and pressure, and the flow rate of the extraction steam from the intermediate-pressure turbine 206 supplied to the reboiler 225 is adjusted.

In the fossil fuel combustion thermal power system 100, furthermore, a second low-pressure turbine blast pipe 246 branching from the first extraction pipe 240, a second lowpressure turbine 242 installed independently of the main steam turbine unit connected with the turbine rotor 211 to be driven by the extraction steam from the intermediate-pressure turbine 206 introduced through the second low-pressure turbine blast pipe 246, and a second condenser 245 for introducing the steam boosted by driving the second low-pressure turbine 242, exchanging heat between the introduced steam and the cooling water flowing in the cooling pipe 10, thereby cooling and condensing the steam are installed. The condensed water condensed by the second condenser 245 is sent again to the boiler 201.

On the entrance side of the second low-pressure turbine 242, a low-pressure turbine entrance control valve 243 for controlling the flowing steam quantity of the second low-pressure turbine 242 and the output of the second low-pressure turbine 242 is installed. Further, to the second low-pressure turbine 242, a generator 244 is connected and it is structured so as to take out the power of the second low-pressure turbine 242 as electric power.

Further, the fossil fuel combustion thermal power system 100 includes a condenser blast pipe 248 for leading the steam branching from the first extraction pipe 240 on the upstream side of the second low-pressure turbine blast pipe 246 and flowing down in the first extraction pipe 240 to the first condenser 209.

On the intermediate-pressure turbine exhaust pipe 207, an intermediate-pressure turbine exhaust pressure regulating valve 251 for adjusting the exhaust steam pressure of the intermediate-pressure turbine is installed.

On the second low-pressure turbine blast pipe 246, a switching valve 247 is installed and on the condenser blast pipe 248, a switching valve 249 is installed.

Fig. 9 is a partial diagram showing the portion of the fossil fuel combustion thermal power system 100 of the fossil fuel combustion thermal power system including the carbon dioxide separation and capture unit of the fourth embodiment shown in Fig. 8.

In the fossil fuel combustion thermal power system 100 shown in Fig. 9, an intermediate-pressure turbine exhaust pressure detector 252 installed on the intermediate-pressure turbine exhaust pipe 207 for detecting the intermediate-pressure turbine exhaust pressure and a blast pressure detector 253 installed on the PCC unit blast pipe 241 for detecting the blast pressure are installed.

Further, a control unit 600 is installed and by the control unit 600, the operation of the second low-pressure turbine 242 is controlled. Namely, by an instruction signal of the control unit 600, the opening angle of the low-pressure turbine entrance control valve 243 is adjusted and the flow rate of the steam supplied to the second low-pressure turbine 242 is controlled.

On the other hand, when the main unit of the carbon dioxide separation and capture unit 200 trips from some cause, for example, when the enriched absorbing solution transfer pump 223 or the lean absorbing solution transfer pump 231 for transferring the absorbing solution trips and the operation of the carbon dioxide separation and capture unit 200 stops urgently, the steam supply from the fossil fuel combustion thermal power system 100 to the carbon dioxide separation and capture unit 200 may be required to stop immediately.

When the steam supply to the carbon dioxide separation and capture unit 200 stops immediately, the surplus steam flows into the first low-pressure turbine 208 of the steam turbine via the intermediate-pressure turbine exhaust pipe 207 and the intermediate-pressure turbine exhaust pressure regulating valve 251, and the steam quantity flowing in the first low-pressure turbine 208 suddenly increases and suddenly exceeds the allowable flow-in steam quantity from the viewpoint of the intensity of the turbine rotor blade of the first low-pressure turbine 208, thus there is the possibility that a load beyond the allowable range may be applied to the low-pressure turbine rotor blade. As a means for avoiding such a sudden load change of the low-pressure turbine caused by the urgent stop of the carbon dioxide separation and capture unit 200, the present invention installs a second low-pressure turbine 242 as an urgent shift destination of the surplus steam.

The control unit 600 installed in the fossil fuel combustion thermal power system 100 shown in Fig. 9 controls the operation of the second low-pressure turbine 242 and when the carbon dioxide separation and capture unit 200 stop urgently the operation of sequentially switching the supply destination of the extraction steam flowing in the first extraction pipe 240 from the carbon dioxide separation and capture unit 200 to the first condenser 209 and second low-pressure turbine 242.

When the carbon dioxide separation and capture unit 200 stops urgently, for example, when the enriched absorbing solution transfer pump 223 or the lean absorbing solution transfer pump 232 which are main units of the carbon dioxide separation and capture unit 200 trips, and the operation of the carbon dioxide separation and capture unit 200 stops urgently, and the steam supplied from the steam turbine cycle of the fossil fuel combustion thermal power system 100 to the reboiler 225 is required to stop immediately, from the sensors respectively installed in the enriched absorbing solution transfer pump 223 and the lean absorbing solution transfer pump 232, a trip signal 223a of the enriched absorbing solution transfer pump 223 or a trip signal 232a of the lean absorbing solution transfer pump 232 is sent to the control unit 600.

Further, as a means for detecting the other faults in the carbon dioxide separation and capture unit 200, by the blast pressure detector 253, the change of the pressure of the steam flowing down in the PCC unit blast pipe 241 is detected and when the detector 253 detects an abnormal change of the pressure, a trip signal is sent from the detector 253 to the control unit 600.

If the control unit 600 detects input of the trip signal, by an instruction signal from the control unit 600, the stop valve 250 is automatically completely closed and the flow of the extraction steam to the carbon dioxide separation and capture unit 200 is interrupted. Further, the switching valve 249 is opened by the instruction signal from the control unit 600, and the supply destination of the extraction steam is switched from the carbon dioxide separation and capture unit 200 to the first condenser 209, and the surplus extraction steam is permitted once to flow into the first condenser 209 through the condenser blast pipe 248 and is captured. Thereafter, by the instruction signal of the control unit 600, the switching valve 249 is closed gradually, thus the opening angles of the second switching valve 247 and the second low-pressure turbine entrance control valve 243 are adjusted, and the supply destination of the extraction steam is controlled so as to be gradually switched to the second low-pressure turbine 242. Further, when switching the supply destination of the extraction steam from the carbon dioxide separation and capture unit 200 to the first condenser 209 and second low-pressure turbine 242, the control unit 600, on the basis of a signal of the intermediate-pressure turbine exhaust pressure detector 252 for detecting the pressure change of the intermediate-pressure turbine exhaust steam, so as to prevent the intermediate-pressure turbine exhaust steam from an excessive reduction in pressure exceeding a predetermined set value by switching the flow path, controls the opening angles of the switching valve 249, switching valve 247, and second low-pressure turbine entrance control valve 243. When the intermediate-pressure turbine exhaust steam is excessively extracted by switching of the supply path, the intermediate-pressure turbine exhaust steam is excessively reduced in pressure and there is the possibility that a load exceeding the allowable quantity may be applied to the last stage blade of the intermediate-pressure turbine. By use of this constitution, by avoiding the load on the last stage blade of the intermediate-pressure turbine, the flow path switching control can be executed.

The surplus steam flowing into the second low-pressure turbine 242 from the intermediate-pressure turbine 206 by switching the flow path drives the second low-pressure turbine 242 and the generator 244, thus electric power is obtained. The steam discharged by driving the second low-pressure turbine 242 is captured and condensed by the condenser 245 and the condensed water is sent to the boiler 201.

The steam quantity required by the reboiler 225 is far larger than the steam quantity required by the reclaimer 226 and is equivalent to about 15% to 20% of the total quantity of evaporation of the boiler. Therefore, when the carbon dioxide separation and capture unit 200 stops urgently, even though a large quantity of surplus steam is generated, the control unit 600 performs the control operation aforementioned, and thus the surplus steam urgent relief function can be fulfilled effectively. Therefore, the sudden flow-in exceeding the allowable quantity on the side of the low-pressure turbine (first low-pressure turbine) of the steam turbine unit can be avoided, and the load change of the boiler 201 and steam turbine due to the surplus steam can be suppressed, so that even at the time of an urgent stop of the carbon dioxide separation and capture unit 200, the stable operation of the fossil fuel combustion thermal power system 100 can be continued.

Further, even during stopping of the carbon dioxide separation and capture unit 200, a large quantity of surplus steam is sent to the second low-pressure turbine 242 without being thrown away and can be captured as electric power, thus more electrical energy can be generated.

### (Embodiment 5)

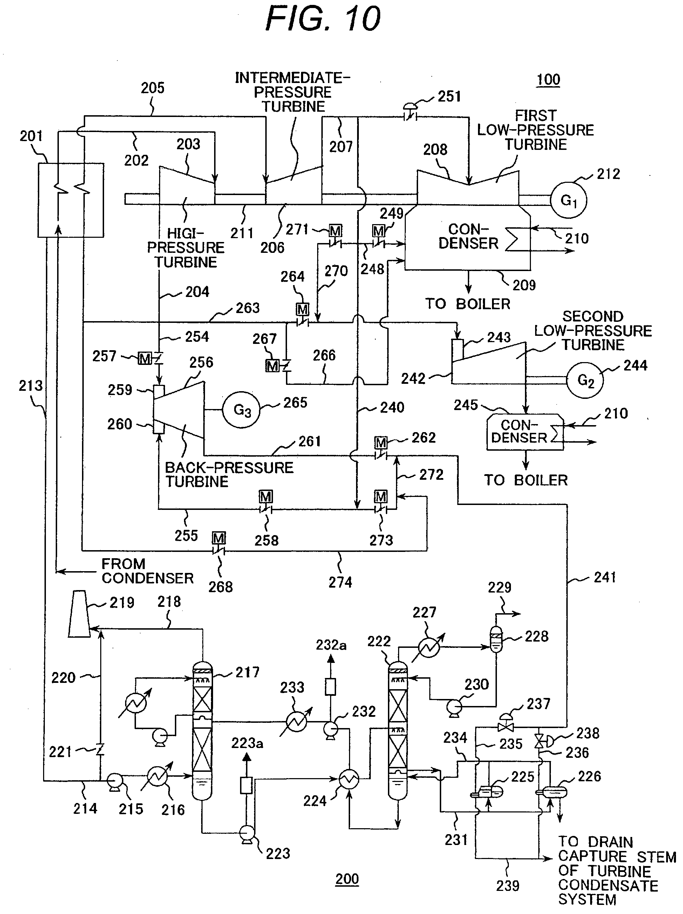

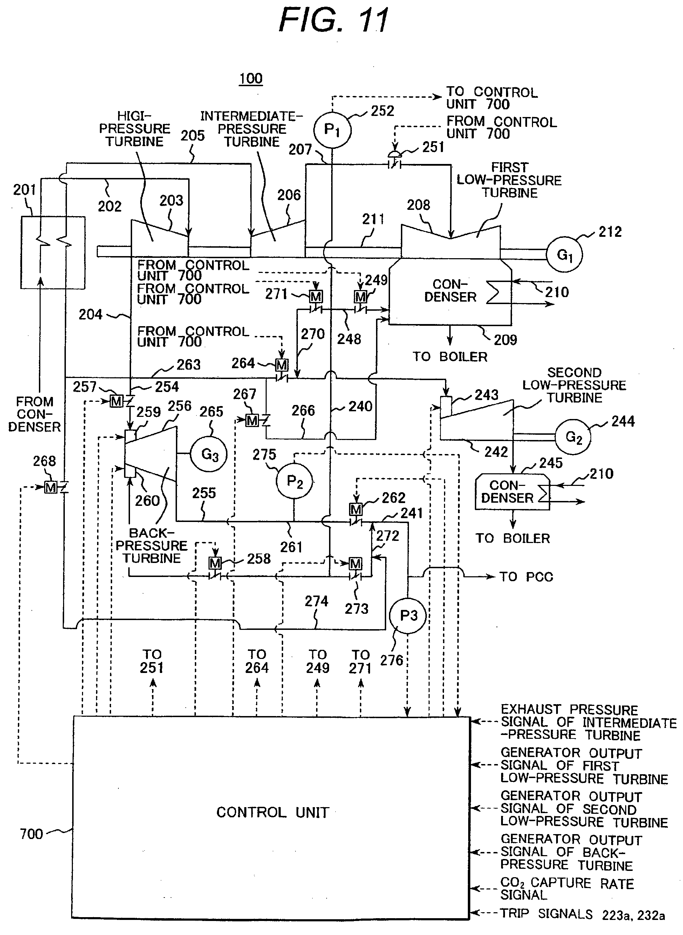

The fossil fuel combustion thermal power system including the carbon dioxide separation and capture unit of the fifth embodiment of the present invention will be explained by referring to Figs. 10 and 11.

The fossil fuel combustion thermal power system including the carbon dioxide separation and capture unit of the fifth embodiment which is this embodiment is common in the basic constitution to the fossil fuel combustion thermal power system including the carbon dioxide separation and capture unit of the fourth embodiment explained previously. Therefore, the explanation of the constitution common to the two is omitted and only the different portions will be explained below.

The fossil fuel combustion thermal power system including the carbon dioxide separation and capture unit of the fifth embodiment shown in Fig. 10 includes the fossil fuel combustion thermal power system 100 composing the steam turbine unit and the carbon dioxide separation and capture unit 200 for separating and capturing carbon dioxide from the boiler exhaust gas.

In this embodiment, in the fossil fuel combustion thermal power system 100, a second extraction pipe 254 branching from the high-pressure turbine exhaust pipe 204 of the high-pressure turbine 203 for permitting a part of the steam flowing down in the high-pressure turbine exhaust pipe 204 to flow down, a back-pressure turbine blast pipe 255 connected to the first extraction pipe 240 through which a part of the steam flowing down in the intermediate-pressure turbine exhaust pipe 207 flows down, a back-pressure turbine 256 driven by the extraction steam led through the second extraction pipe 254 and the back-pressure turbine blast pipe 255, and a generator 265 for generating power by the power of the back-pressure turbine 256 are installed.

On the entrance side of the back-pressure turbine 256, a first back-pressure turbine entrance control valve 259 for controlling the flow-in steam quantity from the side of the second extraction pipe 254 to the back-pressure turbine 256 and a second back-pressure turbine entrance control valve 260 for controlling the flow-in steam quantity from the side of the back-pressure turbine blast pipe 255 to the back-pressure turbine 256 are installed. Further, on the exit side of the back-pressure turbine 256, a back-pressure turbine exhaust pipe path 261 permitting the back-pressure turbine exhaust steam decompressed by driving the back-pressure turbine 256 to flow down, a stop valve 262 installed in the back-pressure turbine exhaust pipe path 261, and the PCC unit blast pipe 241 connected to the back-pressure turbine exhaust pipe path 261 for sending the back-pressure turbine exhaust steam to the reboiler 225 and reclaimer 226 which are installed in the carbon dioxide separation and capture unit 200 which will be described later are installed.

To the second extraction pipe 254, a second low-pressure turbine entrance pipe 263 including the stop valve 264 is connected. The second low-pressure turbine entrance pipe 263 is connected to the second low-pressure turbine 242 and is structured so as to lead the steam flowing down in the second low-pressure turbine entrance pipe 263 to the second low-pressure turbine 242.

Further, a second condenser blast pipe 266 branching from the second low-pressure turbine entrance pipe 263 and interconnecting to the first condenser 209 is installed and in the second condenser blast pipe 266, a switching valve 267 is installed.

Further, the fossil fuel combustion thermal power system 100 includes a third extraction pipe 270 branching from the first extraction pipe 240 and interconnecting to the second low-pressure turbine entrance pipe 263 for leading the extraction steam flowing down in the first extraction pipe 240 to the second low-pressure turbine 242. In the third extraction pipe 270, a switching valve 271 for controlling switching of the flow path of the extraction steam to the side of the second low-pressure turbine is installed.

Furthermore, the first extraction pipe 240 includes a first back-pressure turbine bypass pipe 272 branching on the downstream side of the condenser blast pipe 248 and the third extraction pipe 270, connecting to the PCC unit blast pipe 241 for permitting the extraction steam flowing down in the first extraction pipe 240 to bypass the back-pressure turbine 256 and leading it to the PCC unit blast pipe 241. The back-pressure turbine bypass pipe 272 includes a switching valve 273.

Further, the high-pressure turbine exhaust pipe 204 includes a second back-pressure turbine bypass pipe 274 branching on the downstream side of the second extraction pipe 254, connecting to the first back-pressure turbine bypass pipe 272, permitting the extraction steam of the high-pressure turbine to bypass the back-pressure turbine 256, and leading it to the reboiler 225 and reclaimer 226 of the carbon dioxide separation and capture unit 200 through the PCC unit blast pipe 241. The second back-pressure turbine bypass pipe 274 includes a switching valve 268 for controlling the extraction steam quantity bypassing the back-pressure turbine 256.

Fig. 11 is a partial diagram showing the portion of the fossil fuel combustion thermal power system 100 of the fossil fuel combustion thermal power system including the carbon dioxide separation and capture unit of the fifth embodiment shown in Fig. 10.

In the fossil fuel combustion thermal power system 100, a control unit 700 is installed and by the control unit 700, the operations of the second low-pressure turbine 242 and back-pressure turbine 256 are controlled.

In the fossil fuel combustion thermal power system 100 relating to the fifth embodiment, during the rated load operation of the steam turbine, a system of extracting steam from the intermediate-pressure turbine exhaust pipe 207 and supplying the intermediate-pressure turbine exhaust steam to the back-pressure turbine 256 through the first extraction pipe 240, back-pressure turbine blast pipe 255, and second back-pressure turbine entrance control valve 260 is adopted. On the other hand, when the steam turbine is transferred from the rated load operation to the partial load operation, the steam pressure of the exhaust gas of the intermediate-pressure turbine 206 is lowered, and the exhaust steam cannot be sufficiently pumped to the back-pressure turbine 256, so that in place of the system of extracting steam from the intermediate-pressure turbine exhaust pipe 207 and supplying the intermediate-pressure turbine exhaust steam to the back-pressure turbine 256 through the first extraction pipe 240, back-pressure turbine blast pipe 255, and second back-pressure turbine entrance control valve 260, the system is switched to a system of supplying a part of the high-pressure steam flowing down in the high-pressure turbine exhaust pipe 204 from the high-pressure turbine 203 to the back-pressure turbine 256 through the second extraction pipe 254 and first back-pressure turbine entrance control valve 259, and the steam pressure necessary to drive the back-pressure turbine 256 is ensured.

In the fossil fuel combustion thermal power system 100, when the steam turbine is in the partial load operation, the control unit 700 sends an instruction signal, opens the switching valve 257 installed in the second extraction pipe 254, leads the extraction steam of the high-pressure turbine 203 to the back-pressure turbine 256, adjusts the opening angle of the first back-pressure turbine entrance control valve 259, thereby controlling the flow rate, and drives and controls the back-pressure turbine 256 by the extraction steam from the high-pressure turbine 203.

Next, the steam turbine transfers from the partial load operation to the rated load operation, and the steam pressure flowing in the intermediate-pressure turbine exhaust pipe 207 is increased to a sufficient pressure to be pumped to the back-pressure turbine 256, and then the control unit 700 transmits the instruction signal, thus the switching valve 254 and first back-pressure turbine entrance control valve 259 are closed, and the switching valve 258 is opened, and the extraction steam of the intermediate-pressure turbine 206 is led to the back-pressure turbine 256, and the opening angle of the second back-pressure turbine entrance control valve 260 is adjusted, thus the flow rate is controlled, and by the steam extracted from the intermediate-pressure turbine exhaust steam, the back-pressure turbine 256 is driven and controlled. The back-pressure turbine exhaust steam after the back-pressure turbine 256 is driven is sent to the reboiler 225 and reclaimer 226 of the carbon dioxide separation and capture unit 200 through the back-pressure turbine exhaust pipe path 261 and the PCC unit blast pipe 241.

On the other hand, during the partial load operation of the steam turbine, when the back-pressure turbine 256 trips from some cause, for example, when an abnormal value of a generator output signal of the back-pressure turbine 256 is input to the control unit 700, the control unit 700 transmits an instruction signal and the switching valve 257 and the first back-pressure turbine entrance control valve 259 are closed. Further, the switching valve 268 is opened and the extraction steam is led to the PCC unit blast pipe 241 through the second back-pressure turbine bypass pipe 274 and first back-pressure turbine bypass pipe 272.

Further, during the partial load operation of the steam turbine, when the carbon dioxide separation and capture unit 200 trips, for example, when the enriched absorbing solution transfer pump 223 or the lean absorbing solution transfer pump 232 which are main units of the carbon dioxide separation and capture unit 200 trips, and the operation of the carbon dioxide separation and capture unit 200 stops urgently, and the steam supplied from the steam turbine cycle of the fossil fuel combustion thermal power system 100 to the reboiler 225 is required to stop immediately, a trip signal 223a of the enriched absorbing solution transfer pump 223 or a trip signal 232a of the lean absorbing solution transfer pump 232 which are input from the sensors respectively installed in the enriched absorbing solution transfer pump 223 and the lean absorbing solution transfer pump 232 is sent to the control unit 700.

Further, as a means for detecting the other faults in the carbon dioxide separation and capture unit 200, by a first blast pressure detector 275 installed on the back-pressure turbine blast pipe 255, the change of the pressure of the steam flowing down in the PCC unit blast pipe 241 is detected and when the detector 275 detects an abnormal change of the pressure, a trip signal is sent from the detector 275 to the control unit 700.

When the back-pressure turbine 256 is stopped and the bypass system is used, the back-pressure turbine blast pipe 255 is not used and the first blast pressure detector 275 cannot be used. Therefore, when a second blast pressure detector 276 installed on the downstream side of the joining point of the PCC unit blast pipe 241 to the first back-pressure turbine bypass pipe 272 detects the pressure change of the supplied gas, and the detector 276 detects the abnormal change of the pressure, a trip signal is sent from the detector 276 to the control unit 700.

If the control unit 700 receives the input of the trip signal, by an instruction signal from the control unit 700, the switching valves 257 and 268 are closed, and the switching valve 267 is opened simultaneously, and the extraction steam is led to and captured by the first condenser 209 through the second low-pressure turbine entrance pipe 263 and second condenser blast pipe 266. Thereafter, by the instruction signal from the control unit 700, the switching valve 267 is closed gradually, thus the opening angles of the stop valve 264 and the entrance control valve 243 of the second low-pressure turbine 242 are adjusted, and the supply destination of the extraction steam is controlled so as to be gradually switched to the second low-pressure turbine 242.

On the other hand, during the rated load operation of the steam turbine, when the back-pressure turbine 256 trips from some cause, the control unit 700 transmits an instruction signal, closes the switching valve 258, opens the switching valve 273, and leads the extraction steam to the PCC unit blast pipe 241 through the first back-pressure turbine bypass pipe 272.

Further, when the carbon dioxide separation and capture unit trips, a trip signal is input to the control unit 700 from the enriched absorbing solution transfer pump 223, lean absorbing solution transfer pump 232, and detectors 275 and 276.

If the control unit 700 receives the trip signal of the carbon dioxide separation and capture unit 200, by an instruction signal from the control unit 700, the switching valves 258 and 273 are closed, and the switching valve 249 is opened, and the surplus steam is captured once by the first condenser 209. Thereafter, by the instruction signal from the control unit 700, the switching valve 249 is closed gradually, thus the opening angles of the switching valve 271 and the entrance control valve 243 of the second low-pressure turbine 242 are adjusted, and the supply destination of the extraction steam is controlled so as to be gradually switched to the second low-pressure turbine 242. Further, when switching the flow path of the extraction steam to the first condenser 209 and second lowpressure turbine 242 through the third extraction pipe 270 and condenser blast pipe 248, the control unit 700, on the basis of a signal of the intermediate-pressure turbine exhaust pressure detector 252 for detecting the pressure change of the intermediate-pressure turbine exhaust steam, to prevent the intermediate-pressure turbine exhaust steam from excessively reducing in pressure beyond a predetermined set value due to switching of the flow path, controls the opening angles of the switching valve 249, the switching valve 271, and the entrance control valve 243 of the second low-pressure turbine 242. When the intermediate-pressure turbine exhaust steam is extracted excessively by switching of the supply path, the intermediate-pressure turbine exhaust steam is excessively reduced in pressure and there is the possibility that a load exceeding the allowable quantity may be applied to the last stage blade of the intermediate-pressure turbine. By use of this constitution, by avoiding the load on the last stage blade of the intermediate-pressure turbine, the flow path switching control can be executed.

In the fossil fuel combustion thermal power system including the carbon dioxide separation and capture unit having the aforementioned constitution, during the rated load operation, the exhaust gas of the intermediate-pressure turbine 206 can be supplied to the back-pressure turbine 256 to generate electric power and during the partial load operation, the exhaust gas of the high-pressure turbine 203 can be supplied to the back-pressure turbine 256 to generate electric power.

Further, under the control aforementioned, even when the back-pressure turbine 256 trips from some cause in the partial load operation and the rated load operation, the operation of the back-pressure turbine 256 is stopped, thus the extraction steam is permitted to bypass the back-pressure turbine 256, and thereby can be supplied to the side of the carbon dioxide separation and capture unit 200, and the carbon dioxide separation and capture unit can 200 be operated continuously.

Furthermore, even when the carbon dioxide separation and capture unit 200 stops, the surplus steam can be shifted to the second low-pressure turbine 242, and a sudden flow-in of steam exceeding the allowable quantity on the side of the low-pressure turbine (the first low-pressure turbine 208) of the steam turbine can be avoided, and the load change of the boiler 201 and steam turbine due to the surplus steam is suppressed, so that the stable operation of the fossil fuel combustion thermal power system 100 can be continued.

Further, even during stopping of the carbon dioxide separation and capture unit 200 and the back-pressure turbine 256, a large quantity of surplus steam is sent to the second low-pressure turbine 242 without being throwing away and can be captured as electric power, thus more electrical energy can be generated.

The present invention can be applied to the fossil fuel combustion thermal power system including the carbon dioxide separation and capture unit.

## Claims

1. A fossil fuel combustion thermal power system including a carbon dioxide separation and capture unit comprising:
a fossil fuel combustion thermal power system (100) including a boiler (101) for burning fossil fuel and generating steam and a steam turbine driven by the steam generated by the boiler (101) for generating power, and
a carbon dioxide separation and capture unit (200) including an absorption tower (126) for absorbing and capturing carbon dioxide included in the exhaust gas discharged from the boiler (101) by burning fossil fuel in the boiler (101) of the fossil fuel combustion thermal power system (100) and a reproduction tower (123) of an absorbing solution for separating carbon dioxide from the absorbing solution absorbing carbon dioxide by circulating the absorbing solution between the reproduction tower (123) and the absorption tower (126),
wherein the fossil fuel combustion thermal power system (100) including the carbon dioxide separation and capture unit (200) further comprises:
a back-pressure turbine (107) driven by extraction steam extracted from the turbine of the fossil fuel combustion thermal power system (100) through an extraction pipe (105);
a reboiler (120) for supplying heating steam to the reproduction tower (123) of the carbon dioxide separation and capture unit (200);
a steam pipe (110) for supplying steam flowing down through the back-pressure turbine (107) of the fossil fuel combustion thermal power system (100) to the reboiler (120) as a heat source; **characterized in that** the fossil fuel combustion thermal power system (100) including the carbon dioxide separation and capture unit (200) further comprises:
an emergency relief pipe (112, 156, 164) interconnected to the extraction pipe (105) for supplying the extraction steam extracted from the turbine side of the fossil fuel combustion thermal power system (100) to the back-pressure turbine (107) for permitting the extraction steam flowing down through the extraction pipe (105, 150) to bypass the back-pressure turbine (107) and flow down to a condenser through the emergency relief pipe (112, 156, 164) when an operation of the carbon dioxide separation and capture unit (200) stops urgently; and
an emergency relief valve (111, 156, 163) installed on the emergency relief pipe (112, 156, 164) for controlling flow of the extraction steam through the emergency relief pipe (112).

2. The fossil fuel combustion thermal power system including a carbon dioxide separation and capture unit according to claim 1, wherein
the back-pressure turbine (107) is driven by extraction steam extracted from a high-pressure turbine (103) in the steam turbine side of the fossil fuel combustion thermal power system (100) through the extraction pipe (105, 150);
the emergency relief pipe (112, 156) is interconnected to the extraction pipe (105, 150) for supplying the extraction steam extracted from the high-pressure turbine (103) in the steam turbine side of the fossil fuel combustion thermal power system (100) to the back-pressure turbine (107) for permitting the extraction steam flowing down through the extraction pipe (105, 150) to bypass the back-pressure turbine (107) and flow down to the condenser; and
the extraction steam flowing down through the extraction pipe (105, 150) is flowing down to the condenser through the emergency relief pipe (112,156) to bypass the back-pressure turbine (107) when an operation of the carbon dioxide separation and capture unit (200) stops urgently.

3. The fossil fuel combustion thermal power system including a carbon dioxide separation and capture unit according to claim 1, wherein
the steam turbine includes a high-pressure turbine an intermediate-pressure turbine (116) driven by the steam generated by the boiler (101) for generating power, and
the fossil fuel combustion thermal power system (100) including the carbon dioxide separation and capture unit (200) further comprises:
a reheat steam extraction pipe (150) branching from a high-temperature reheat steam pipe (115) for supplying reheat steam reheated by the boiler (101) to the intermediate-pressure turbine (116) from the boiler (101) of the fossil fuel combustion thermal power system (100);
a temperature lowering unit (151) for lowering a temperature of the reheat steam extracted through the reheat steam extraction pipe (150),
wherein
the back-pressure turbine (107) is driven by the reheat steam lowered in temperature by the temperature lowering unit (151);
a second emergency relief pipe (156) as the emergency relief pipe interconnected to the reheat steam extraction pipe (150) for supplying the reheat steam extracted from the high-temperature reheat steam pipe (115) through the reheat steam extraction pipe (150) of the fossil fuel combustion thermal power system (100) to the back-pressure turbine (107) for permitting the reheat steam flowing down through the reheat steam extraction pipe (150) to bypass the back-pressure turbine (107) and flow down to the condenser through the second emergency relief pipe (156) when an operation of the carbon dioxide separation and capture unit (200) stops urgently ; and
a second emergency relief valve (155) installed in the second emergency relief pipe (156) for controlling flow of the reheat steam through the second emergency relief pipe (156).

4. The fossil fuel combustion thermal power system including a carbon dioxide separation and capture unit according to claim 1, wherein
the steam turbine includes a high-pressure turbine (103) and an intermediate-pressure turbine (116) driven by the steam generated by the boiler (101) for generating power, and
the back-pressure turbine (107) is driven by the extraction steam extracted from the high-pressure turbine (103) in the steam turbine side of the fossil fuel combustion thermal power system (100) through an extraction pipe (105); and
the fossil fuel combustion thermal power system (100) including the carbon dioxide separation and capture unit (200) further comprises:
a second steam extraction pipe (160) for branching apart of the exhaust steam of the intermediate-pressure turbine (116) supplied from the intermediate-pressure turbine (116) of the fossil fuel combustion thermal power system (100) to a low-pressure turbine (118);
a second steam pipe (161) for supplying the extraction steam extracted through the second steam extraction pipe (160) to the back-pressure turbine (107);
a first emergency relief pipe (112) as part of the emergency relief pipe (112, 164) interconnected to the extraction pipe (105) for supplying the extraction steam extracted from the high-pressure turbine (103) in the steam turbine side of the fossil fuel combustion thermal power system (100) to the back-pressure turbine (107) for permitting the extraction steam flowing down through the extraction pipe (105) to bypass the back-pressure turbine (107) and flow down through the first emergency relief pipe (112) to the condenser when an operation of the carbon dioxide separation and capture unit (200) stops urgently;
the first emergency relief valve (111) installed in the first emergency relief pipe (112) for controlling flow of the extraction steam through the first emergency relief pipe (112);
a third emergency relief pipe (164) as another part of the emergency relief pipe (112, 164) interconnected to the second steam pipe (161) for supplying the extraction steam extracted through the second steam extraction pipe (160) from the intermediate-pressure turbine (116) in the steam turbine side of the fossil fuel combustion thermal power system (100) to the back-pressure turbine (107) for permitting the extraction steam flowing down through the second steam pipe (160) to bypass the back-pressure turbine (107) and flow down to the condenser through the third emergency relief pipe (164) when an operation of the carbon dioxide separation and capture unit (200) stops urgently, and
a third emergency relief valve (163) installed in the third emergency relief pipe (164) for controlling flow of the reheat steam through the third emergency relief pipe (164).

5. The fossil fuel combustion thermal power system including a carbon dioxide separation and capture unit according to claim 2, further comprising:
a control unit (300) for outputting an instruction signal for controlling the opening and closing of the emergency relief valve (111) on the basis of a trip signal (127a, 129a) of the carbon dioxide separation and capture unit (200) at the time of an urgent stop of the carbon dioxide separation and capture unit (200) and controlling the extraction steam extracted through the extraction pipe (105) of the fossil fuel combustion thermal power system (100) so as to pass through the emergency relief pipe (112), bypass the back-pressure turbine (107), and flow down to the condenser.

6. The fossil fuel combustion thermal power system including a carbon dioxide separation and capture unit according to claim 3, further comprising:
a control unit (400) for outputting an instruction signal for controlling the opening and closing of the second emergency relief valve (155) on the basis of a trip signal (127a, 129a) of the carbon dioxide separation and capture unit (200) at the time of an urgent stop of the carbon dioxide separation and capture unit (200) and controlling the reheat steam flowing down through the reheat steam extraction pipe (150) of the fossil fuel combustion thermal power system (100) so as to pass through the second emergency relief pipe (156), bypass the back-pressure turbine (107), and flow down to the condenser.

7. The fossil fuel combustion thermal power system including a carbon dioxide separation and capture unit according to claim 4, further comprising:
a control unit (500), in a partial load operation of the fossil fuel combustion thermal power system (100), for outputting an instruction signal for controlling the opening and closing of the first emergency relief valve (111) on the basis of a trip signal (127a, 129a) of the carbon dioxide separation and capture unit (200) at the time of an urgent stop of the carbon dioxide separation and capture unit (200) and controlling the extraction steam extracted through the extraction pipe (105) of the fossil fuel combustion thermal power system (100) so as to pass through the first emergency relief pipe (112), bypass the back-pressure turbine (107), and flow down to the condenser, and
in a total partial load operation of the fossil fuel combustion thermal power system, for outputting an instruction signal for controlling the opening and closing of the third emergency relief valve (163) and controlling the extraction steam extracted through the second extraction pipe of the fossil fuel combustion thermal power system so as to pass through the third emergency relief pipe (164), bypass the back-pressure turbine (107), and flow down to the condenser.

8. The fossil fuel combustion thermal power system including a carbon dioxide separation and capture unit according to any one of claims 5 to 7, wherein:
the trip signal (127a, 129a) of the carbon dioxide separation and capture unit is a trip signal (127a, 129a) of a transfer pump (127, 129) for transferring the absorbing solution between the absorption tower (126) and the reproduction tower (123) of the carbon dioxide separation and capture unit (200).

9. The fossil fuel combustion thermal power system including a carbon dioxide separation and capture unit according to any one of claims 2 and 4, further comprising:
a low-pressure turbine (118) driven by extraction steam sent from the high-pressure turbine (103) to the back-pressure turbine (107) through the extraction pipe (105), and
a flow path switching valve for switching a supply destination of the extraction steam sent from the high-pressure turbine (103) to the back-pressure turbine (107) through the extraction pipe (105) from the back-pressure turbine (107) to the low-pressure turbine (118).

10. The fossil fuel combustion thermal power system including a carbon dioxide separation and capture unit 15 according to claim 4, further comprising:
a low-pressure turbine (118) driven by extraction steam sent from the intermediate-pressure turbine (116) to the back-pressure turbine (107), and
a flow path switching valve for switching a supply destination of the extraction steam sent from the intermediate-pressure turbine (116) to the back-pressure turbine (107) from the back-pressure turbine (107) to the low-pressure turbine (118).

## Patentansprüche

1. Wärmekraftwerk zur Verbrennung fossiler Brennstoffe, das eine Kohlendioxidabscheidungs- und Einfangeinheit enthält, das Folgendes umfasst:
ein Wärmekraftwerk zur Verbrennung fossiler Brennstoffe (100), das einen Kessel (101) zum Verbrennen fossiler Brennstoffe und zum Erzeugen von Dampf und eine Dampfturbine, die zur Stromerzeugung von dem durch den Kessel (101) erzeugten Dampf angetrieben wird, enthält, und
eine Kohlendioxidabscheidungs- und Einfangeinheit (200), die einen Absorptionsturm (126) zum Absorbieren und Einfangen des Kohlendioxids, das in dem von dem Kessel (101) durch Verbrennen fossiler Brennstoffe in dem Kessel (101) des Wärmekraftwerks zur Verbrennung fossiler Brennstoffe (100) freigesetzten Abgas enthalten ist, und einen Reproduktionsturm (123) von einer absorbierenden Lösung zum Abscheiden des Kohlendioxids aus der absorbierenden Lösung, wobei das Kohlendioxid durch Zirkulieren der absorbierenden Lösung zwischen dem Reproduktionsturm (123) und dem Absorptionsturm (126) absorbiert wird,
wobei das Wärmekraftwerk zur Verbrennung fossiler Brennstoffe (100), das die Kohlendioxidabscheidungs- und Einfangeinheit (200) enthält, ferner Folgendes umfasst:
eine Gegendruckturbine (107), die von dem Entnahmedampf angetrieben wird, der durch eine Entnahmeleitung (105) aus der Turbine des Wärmekraftwerks zur Verbrennung fossiler Brennstoffe (100) entnommen wird;
einen Rückverdampfer (120) zum Versorgen des Reproduktionsturms (123) der Kohlendioxidabscheide- und Einfangeinheit (200) mit Heizdampf;
eine Dampfleitung (110) zum Versorgen des Rückverdampfers (120) mit dem Dampf, der durch die Gegendruckturbine (107) des Wärmekraftwerks zur Verbrennung fossiler Brennstoffe (100) herunterströmt, als einer Wärmequelle;
**dadurch gekennzeichnet, dass** das Wärmekraftwerk zur Verbrennung fossiler Brennstoffe (100), das die Kohlendioxidabscheideund Einfangeinheit (200) enthält, ferner Folgendes umfasst:
eine Notfallentlastungsleitung (112, 156, 164), die mit der Entnahmeleitung (105) zur Versorgung der Gegendruckturbine (107) mit dem aus der Turbinenseite des Wärmekraftwerks zur Verbrennung fossiler Brennstoffe (100) entnommenen Entnahmedampf verbunden ist, um zu ermöglichen, dass der durch die Entnahmeleitung (105, 150) herunterströmende Entnahmedampf die Gegendruckturbine (107) umgeht und durch die Notfallentlastungsleitung (112, 156, 164) zu einem Kühler herunterströmt, wenn ein Vorgang der Kohlendioxidabscheide- und Einfangeinheit (200) zwingend anhält; und
ein Notfallentlastungsventil (111, 155, 163), das zum Steuern des Stroms des Entnahmedampfs durch die Notfallentlastungsleitung (112) auf der Notfallentlastungsleitung (112, 156, 164) eingebaut ist.

2. Wärmekraftwerk zur Verbrennung fossiler Brennstoffe, das eine Kohlendioxidabscheide- und Einfangeinheit enthält, nach Anspruch 1, wobei
die Gegendruckturbine (107) von dem Entnahmedampf angetrieben wird, der durch die Entnahmeleitung (105, 150) aus einer Hochdruckturbine (103) in der Dampfturbinenseite des Wärmekraftwerks zur Verbrennung fossiler Brennstoffe (100) entnommen wird;
die Notfallentlastungsleitung (112, 156) mit der Entnahmeleitung (105, 150) zum Versorgen der Gegendruckturbine (107) mit dem aus der Hochdruckturbine (103) in der Dampfturbinenseite des Wärmekraftwerks zur Verbrennung fossiler Brennstoffe (100) entnommenen Entnahmedampf verbunden ist, um zu ermöglichen, dass der durch die Entnahmeleitung (105, 150) herunterströmende Entnahmedampf die Gegendruckturbine (107) umgeht und zu dem Kühler herunterströmt; und
der durch die Entnahmeleitung (105, 150) herunterströmende Entnahmedampf durch die Notfallentlastungsleitung (112, 156) zu dem Kühler herunterströmt, um die Gegendruckturbine (107) zu umgehen, wenn ein Vorgang der Kohlendioxidabscheide- und Einfangeinheit (200) zwingend anhält.

3. Wärmekraftwerk zur Verbrennung fossiler Brennstoffe, das eine Kohlendioxidabscheide- und Einfangeinheit enthält, nach Anspruch 1, wobei
die Dampfturbine eine Hochdruckturbine und eine Zwischendruckturbine (116) enthält, die zur Stromerzeugung von dem durch den Kessel (101) erzeugten Dampf angetrieben werden, und
das Wärmekraftwerk zur Verbrennung fossiler Brennstoffe (100), das eine Kohlendioxidabscheide- und Einfangeinheit (200) enthält, ferner Folgendes umfasst:
eine Entnahmeleitung für wiederaufgeheizten Dampf (150), die von einer Hochtemperaturleitung für wiederaufgeheizten Dampf (115) abzweigt, um die Zwischendruckturbine (116) mit dem wiederaufgeheiztem Dampf aus dem Kessel (101) des Wärmekraftwerks zur Verbrennung fossiler Brennstoffe (100), der durch den Kessel (101) wiederaufgeheizt wurde, zu versorgen;
eine Temperatursenkeinheit (151) zum Senken einer Temperatur des durch die Entnahmeleitung für wiederaufgeheizten Dampf (150) entnommenen, wiederaufgeheizten Dampfs, wobei
die Gegendruckturbine (107) von dem wiederaufgeheizten Dampf angetrieben wird, dessen Temperatur durch die Temperatursenkeinheit (151) gesenkt wurde;
eine zweite Notfallentlastungsleitung (156) als die Notfallentlastungsleitung, die mit der Entnahmeleitung für wiederaufgeheizten Dampf (150) zur Versorgung der Gegendruckturbine (107) mit dem durch die Entnahmeleitung für wiederaufgeheizten Dampf (150) aus der Hochtemperaturleitung für wiederaufgeheizten Dampf (115) des Wärmekraftwerks zur Verbrennung fossiler Brennstoffe (100) entnommenen, wiederaufgeheizten Dampf verbunden ist, um zu ermöglichen, dass der durch die Entnahmeleitung für wiederaufgeheizten Dampf (150) herunterströmende, wiederaufgeheizte Dampf die Gegendruckturbine (107) umgeht und durch die zweite Notfallentlastungsleitung (156) zu dem Kühler herunterströmt, wenn ein Vorgang der Kohlendioxidabscheide- und Einfangeinheit (200) zwingend anhält; und
ein zweites Notfallentlastungsventil (155), das zum Steuern des Stroms des wiederaufgeheizten Dampfs durch die zweite Notfallentlastungsleitung (156) in der zweiten Notfallentlastungsleitung (156) eingebaut ist.

4. Wärmekraftwerk zur Verbrennung fossiler Brennstoffe, das eine Kohlendioxidabscheide- und Einfangeinheit enthält, nach Anspruch 1, wobei
die Dampfturbine eine Hochdruckturbine (103) und eine Zwischendruckturbine (116) enthält, die zur Stromerzeugung von dem durch den Kessel (101) erzeugten Dampf angetrieben werden, und
die Gegendruckturbine (107) von dem Entnahmedampf angetrieben wird, der durch eine Entnahmeleitung (105) aus der Hochdruckturbine (103) in der Dampfturbinenseite des Wärmekraftwerks zur Verbrennung fossiler Brennstoffe (100) entnommen wird; und
das Wärmekraftwerk zur Verbrennung fossiler Brennstoffe (100), das eine Kohlendioxidabscheide- und Einfangeinheit (200) enthält, ferner Folgendes umfasst:
eine zweite Dampfentnahmeleitung (160) zum Abzweigen des Abgasdampfs der Zwischendruckturbine (116), der von der Zwischendruckturbine (116) des Wärmekraftwerks zur Verbrennung fossiler Brennstoffe (100) für eine Niederdruckturbine (118) bereitgestellt wird;
eine zweite Dampfleitung (161) zum Versorgen der Gegendruckturbine (107) mit dem durch die zweite Dampfentnahmeleitung (160) entnommenen Entnahmedampf;
eine erste Notfallentlastungsleitung (112), die als Teil der Notfallentlastungsleitung (112, 164) mit der Entnahmeleitung (105) zum Versorgen der Gegendruckturbine (107) mit dem von der Hochdruckturbine (103) in der Dampfturbinenseite des Wärmekraftwerks zur Verbrennung fossiler Brennstoffe (100) entnommenen Entnahmedampf verbunden ist, um zu ermöglichen, dass der durch die Entnahmeleitung (105) herunterströmende Entnahmedampf die Gegendruckturbine (107) umgeht und durch die erste Notfallentlastungsleitung (112) zu dem Kühler herunterfließt, wenn ein Vorgang der Kohlendioxidabscheide- und Einfangeinheit (200) zwingend anhält;
ein erstes Notfallentlastungsventil (111) das zum Steuern des Stroms des Entnahmedampfs durch die erste Notfallentlastungsleitung (112) in der ersten Notfallentlastungsleitung (112) eingebaut ist;
eine dritte Notfallentlastungleitung (164), die als ein anderer Teil der Notfallentlastungsleitung (112, 164) mit der zweiten Dampfleitung (161) zum Versorgen der Gegendruckturbine (107) mit dem durch die zweite Dampfentnahmeleitung (160) aus der Zwischendruckturbine (116) in der Dampfturbinenseite des Wärmekraftwerks zur Verbrennung fossiler Brennstoffe (100) entnommenen Entnahmedampf verbunden ist, um zu ermöglichen, dass der durch die zweite Dampfleitung (160) herunterströmende Entnahmedampf die Gegendruckturbine (107) umgeht und durch die dritte Notfallentlastungsleitung (164) zu dem Kühler herunterströmt, wenn ein Vorgang der Kohlendioxidabscheide- und Einfangeinheit (200) zwingend anhält, und
ein drittes Notfallentlastungsventil (163), das zum Steuern des Stroms des wiederaufgeheizten Dampfs durch die dritte Notfallentlastungsleitung (164) in der dritten Notfallentlastungsleitung (164) eingebaut ist.

5. Wärmekraftwerk zur Verbrennung fossiler Brennstoffe, das eine Kohlendioxidabscheide- und Einfangeinheit enthält, nach Anspruch 2, das ferner Folgendes umfasst:
eine Steuereinheit (300) zum Ausgeben eines Anweisungssignals zum Steuern des Öffnens und des Schließens des Notfallentlastungsventils (111) auf der Basis eines auslösenden Signals (127a, 129a) der Kohlendioxidabscheide- und Einfangeinheit (200) zu dem Zeitpunkt eines zwingenden Anhaltens der Kohlendioxidabscheide- und Einfangeinheit (200) und zum Steuern des durch die Entnahmeleitung (105) des Wärmekraftwerks zur Verbrennung fossiler Brennstoffe (100) entnommenen Entnahmedampfs derart, dass er durch die Notfallentlastungsleitung (112) geht, die Gegendruckturbine (107) umgeht und zu dem Kühler hinunterströmt.

6. Wärmekraftwerk zur Verbrennung fossiler Brennstoffe, das eine Kohlendioxidabscheide- und Einfangeinheit enthält, nach Anspruch 3, das ferner Folgendes umfasst:
eine Steuereinheit (400) zum Ausgeben eines Anweisungssignals zum Steuern des Öffnens und des Schließens des zweiten Notfallentlastungsventils (155) auf der Basis eines auslösenden Signals (127a, 129a) der Kohlendioxidabscheide- und Einfangeinheit (200) zu dem Zeitpunkt eines zwingenden Anhaltens der Kohlendioxidabscheideund Einfangeinheit (200) und zum Steuern des durch die Entnahmeleitung für wiederaufgeheizten Dampf (150) des Wärmekraftwerks zur Verbrennung fossiler Brennstoffe (100) herunterströmenden, wiederaufgeheizten Dampfs derart, dass er durch die zweite Notfallentlastungsleitung (156) geht, die Gegendruckturbine (107) umgeht und zu dem Kühler hinunterströmt.

7. Wärmekraftwerk zur Verbrennung fossiler Brennstoffe, das eine Kohlendioxidabscheide- und Einfangeinheit enthält, nach Anspruch 4, das ferner Folgendes umfasst:
eine Steuereinheit (500) zum Ausgeben eines Anweisungssignals zum Steuern des Öffnens und des Schließens des ersten Notfallentlastungsventils (111) auf der Basis eines auslösenden Signals (127a, 129a) der Kohlendioxidabscheide- und Einfangeinheit (200) zu dem Zeitpunkt eines zwingenden Anhaltens der Kohlendioxidabscheideund Einfangeinheit (200) und zum Steuern des durch die Entnahmeleitung (105) des Wärmekraftwerks zur Verbrennung fossiler Brennstoffe (100) entnommenen Entnahmedampfs derart, dass er durch die erste Notfallentlastungsleitung (112) geht, die Gegendruckturbine (107) umgeht und zu dem Kühler hinunterströmt, in einem Teillastbetrieb des Wärmekraftwerks zur Verbrennung fossiler Brennstoffe (100), und
zum Ausgeben eines Anweisungssignals zum Steuern des Öffnens und Schließens des dritten Notfallentlastungsventils (163) und zum Steuern des durch die zweite Entnahmeleitung des Wärmekraftwerks zur Verbrennung fossiler Brennstoffe entnommenen Entnahmedampfs derart, dass er durch die dritte Notfallentlastungsleitung (164) geht, die Gegendruckturbine (107) umgeht und zu dem Kühler hinunterströmt, in einem vollen Teillastbetrieb des Wärmekraftwerks zur Verbrennung fossiler Brennstoffe.

8. Wärmekraftwerk zur Verbrennung fossiler Brennstoffe, das eine Kohlendioxidabscheide- und Einfangeinheit enthält, nach einem der Ansprüche 5 bis 7, wobei:
das auslösende Signal (127a, 129a) der Kohlendioxidabscheideund Einfangeinheit ein auslösendes Signal (127a, 129a) von einer Übertragungspumpe (127, 129) zum Übertragen der absorbierenden Lösung zwischen dem Absorptionsturm (126) und dem Reproduktionsturm (123) der Kohlendioxidabscheide- und Einfangeinheit (200) ist.

9. Wärmekraftwerk zur Verbrennung fossiler Brennstoffe, das eine Kohlendioxidabscheide- und Einfangeinheit enthält, nach einem der Ansprüche 2 und 4, das ferner Folgendes umfasst:
eine Niederdruckturbine (118), die durch den von der Hochdruckturbine (103) durch die Entnahmeleitung (105) zu der Gegendruckturbine (107) gesendeten Entnahmedampf angetrieben wird, und
ein Strömungswegschaltventil zum Umschalten eines Versorgungsziels des von der Hochdruckturbine (103) durch die Entnahmeleitung (105) zu der Gegendruckturbine (107) gesendeten Entnahmedampfs von der Gegendruckturbine (107) auf die Niederdruckturbine (118).

10. Wärmekraftwerk zur Verbrennung fossiler Brennstoffe, das eine Kohlendioxidabscheide- und Einfangeinheit 15 enthält, nach Anspruch 4, das ferner Folgendes umfasst:
eine Niederdruckturbine (118), die durch den von der Zwischendruckturbine (116) zu der Gegendruckturbine (107) gesendeten Entnahmedampf angetrieben wird, und
ein Strömungswegschaltventil zum Umschalten eines Versorgungsziels des von der Zwischendruckturbine (116) zu der Gegendruckturbine (107) gesendeten Entnahmedampfs von der Gegendruckturbine (107) auf die Niederdruckturbine (118).

## Revendications

1. Système formant centrale thermique à combustion de combustible fossile incluant une unité de séparation et de capture de dioxyde de carbone comprenant :
un système formant centrale thermique à combustion de combustible fossile (100) incluant une chaudière (100) pour brûler un combustible fossile et générer de la vapeur, et une turbine à vapeur entraînée par la vapeur générée par la chaudière (101) pour générer une puissance, et
une unité de séparation et de capture de dioxyde de carbone (200) incluant une tour d'absorption (126) pour absorber et capturer le dioxyde de carbone inclus dans les gaz d'échappement déchargés depuis la chaudière (101) en brûlant le combustible fossile dans la chaudière (101) du système formant centrale thermique à combustion de combustible fossile (100), et une tour de reproduction (123) d'une solution absorbante pour séparer le dioxyde de carbone depuis la solution absorbante qui absorbe le dioxyde de carbone en faisant circuler la solution absorbante entre la tour de reproduction (123) et la tour d'absorption (126),
dans lequel le système formant centrale thermique à combustion de combustible fossile (100) incluant l'unité de séparation et de capture de dioxyde de carbone (200) comprend en outre :
une turbine à contrepression (107) entraînée par extraction de la vapeur extraite de la turbine du système formant centrale thermique à combustion de combustible fossile (100) via un tube d'extraction (105);
une chaudière de réchauffement (120) pour alimenter de la vapeur de chauffage à la tour de reproduction (123) de l'unité de séparation et de capture de dioxyde de carbone (200) ;
un tube à vapeur (110) pour alimenter la vapeur qui s'écoule à travers la turbine à contrepression (107) du système formant centrale thermique à combustion de combustible fossile (100) vers la chaudière de réchauffement (120) à titre de source de chaleur ;
**caractérisé en ce que** le système formant centrale thermique à combustion de combustible fossile (100) incluant l'unité de séparation et de capture de dioxyde de carbone (200) comprend en outre :
un tube de décharge d'urgence (112, 156, 164) interconnecté au tube d'extraction (105) pour alimenter la vapeur d'extraction extraite depuis le côté de la turbine du système formant centrale thermique à combustion de combustible fossile (100) vers la turbine à contrepression (107) pour permettre à la vapeur extraite s'écoulant à travers le tube d'extraction (105, 150) de bypasser la turbine à contrepression (107) et de s'écouler vers un condenseur via le tube de décharge d'urgence (112, 156, 164) quand une opération de l'unité de séparation de capture de dioxyde de carbone (200) s'arrête en urgence ; et
une valve de décharge d'urgence (111, 156, 163) installée sur le tube de décharge d'urgence (112, 156, 164) pour commander l'écoulement de la vapeur extraite via le tube de décharge d'urgence (112).

2. Système formant centrale thermique à combustion de combustible fossile incluant une unité de séparation et de capture de dioxyde de carbone selon la revendication 1, dans lequel
la turbine à contrepression (107) est entraînée par de la vapeur extraite depuis une turbine à haute pression (103) sur le côté de la turbine à vapeur du système formant centrale thermique à combustion de combustible fossile (100) via le tube d'extraction (105, 150) ;
le tube de décharge d'urgence (112, 156) est interconnecté au tube d'extraction (105, 150) pour alimenter la vapeur extraite depuis la turbine à haute pression (103) sur le côté de la turbine à vapeur du système formant centrale thermique à combustion de combustible fossile (100) vers la turbine à contrepression (107) pour permettre à la vapeur extraite qui s'écoule à travers le tube d'extraction (105, 150) de bypasser la turbine à contrepression (107) et de s'écouler vers le condenseur ; et
la vapeur extraite qui s'écoule à travers le tube d'extraction (105, 150) s'écoule vers le condenseur via le tube de décharge d'urgence (112, 156) pour bypasser la turbine à contrepression (107) quand une opération de l'unité de séparation et de capture de dioxyde de carbone (200) s'arrête en urgence.

3. Système formant centrale thermique à combustion de combustible fossile incluant une unité de séparation et de capture de dioxyde de carbone selon la revendication 1, dans lequel
la turbine à vapeur inclut une turbine à haute pression et une turbine à pression intermédiaire (116) entraînée par la vapeur générée par la chaudière (101) pour générer une puissance, et
le système formant centrale thermique à combustion de combustible fossile (100) incluant l'unité de séparation et de capture de dioxyde de carbone (200) comprend en outre :
un tube d'extraction de vapeur réchauffée (150) ramifié depuis un tube de vapeur réchauffée à haute température (115) pour alimenter de la vapeur réchauffée par la chaudière (101) vers la turbine à pression intermédiaire (116) depuis la chaudière (101) du système formant centrale thermique à combustion de combustible fossile (100) ;
une unité d'abaissement de température (151) pour abaisser une température de la vapeur réchauffée extraite via le tube d'extraction de vapeur réchauffée (150), dans lequel
la turbine à contrepression (107) est entraînée par la vapeur réchauffée dont la température est abaissée par l'unité d'abaissement de température (151);
un second tube de décharge d'urgence (156) à titre de tube de décharge d'urgence interconnecté au tube d'extraction de vapeur réchauffée (150) pour alimenter la vapeur réchauffée extraite depuis le tube de vapeur réchauffée à haute température (115) via le tube d'extraction de vapeur réchauffée (150) du système formant centrale thermique à combustion de combustible fossile (100) vers la turbine à contrepression (107) pour permettre à la vapeur réchauffée qui s'écoule à travers le tube d'extraction de vapeur réchauffée (150) de bypasser la turbine à contrepression (105) et de s'écouler vers le condenseur via le second tube de décharge d'urgence (156) quand une opération de l'unité de séparation et de capture de dioxyde de carbone (200) s'arrête en urgence ; et
une seconde valve de décharge d'urgence (155) installée dans le second tube de décharge d'urgence (156) pour commander l'écoulement de la vapeur réchauffée via le second tube de décharge d'urgence (156).

4. Système formant centrale thermique à combustion de combustible fossile incluant une unité de séparation et de capture de dioxyde de carbone selon la revendication 1, dans lequel
la turbine à vapeur inclut une turbine à haute pression (103) et une turbine à pression intermédiaire (116) entraînée par la vapeur générée par la chaudière (101) pour générer une puissance, et
la turbine à contrepression (107) est entraînée par la vapeur extraite depuis la turbine à haute pression (103) sur le côté de la turbine à vapeur du système formant centrale thermique à combustion de combustible fossile (100) via un tube d'extraction (105) ; et
le système formant centrale thermique à combustion de combustible fossile (100) incluant l'unité de séparation et de capture de dioxyde de carbone (200) comprend en outre :
un second tube d'extraction de vapeur (160) destiné à ramifier la vapeur à l'échappement de la turbine à pression intermédiaire (116) alimentée depuis la turbine à pression intermédiaire (116) du système formant centrale thermique à combustion de combustible fossile (100) vers une turbine à basse pression (118) ;
un second tube à vapeur (161) pour alimenter la vapeur extraite via le second tube d'extraction de vapeur (160) vers la turbine à contrepression (107) ;
un premier tube de décharge d'urgence (112) faisant partie du tube de décharge d'urgence (112, 164) interconnecté au tube d'extraction (105) pour alimenter la vapeur extraite depuis la turbine à haute pression (103) sur le côté de la turbine à vapeur du système formant centrale thermique à combustion de combustible fossile (100) vers la turbine à contrepression (107) pour permettre à la vapeur extraite qui s'écoule à travers le tube d'extraction (105) de bypasser la turbine à contrepression (107) et de s'écouler via le premier tube de décharge d'urgence (112) vers le condenseur quand une opération de l'unité de séparation et de capture de dioxyde de carbone (200) s'arrête en urgence ;
la première valve de décharge d'urgence (111) installée dans le premier tube de décharge d'urgence (112) pour commander l'écoulement de la vapeur extraite via le premier tube de décharge d'urgence (112) ;
un troisième tube de décharge d'urgence (164) constituant une autre partie du tube de décharge d'urgence (112, 164) interconnecté au second tube de vapeur (161) pour alimenter la vapeur extraite via le second tube d'extraction de vapeur (160) depuis la turbine à pression intermédiaire (116) sur le côté de la turbine à vapeur du système formant centrale thermique à combustion de combustible fossile (100) vers la turbine à contrepression (107) pour permettre à la vapeur extraite qui s'écoule via le second tube de vapeur (160) de bypasser la turbine à contrepression (107) et de s'écouler vers le condenseur via le troisième tube de décharge d'urgence (164) quand une opération de l'unité de séparation et de capture de dioxyde de carbone (200) s'arrête en urgence, et
une troisième valve de décharge d'urgence (163) installée dans le troisième tube de décharge d'urgence (164) pour commander l'écoulement de la vapeur réchauffée via le troisième tube de décharge d'urgence (164).

5. Système formant centrale thermique à combustion de combustible fossile incluant une unité de séparation et de capture de dioxyde de carbone selon la revendication 2, comprenant en outre :
une unité de commande (300) pour délivrer un signal d'instruction afin de commander l'ouverture et la fermeture de la valve de décharge d'urgence (111) sur la base d'un signal de déclenchement (127a, 129a) de l'unité de séparation et de capture de dioxyde de carbone (200) au moment d'un arrêt d'urgence de l'unité de séparation et de capture de dioxyde de carbone (200), et de commander la vapeur extraite via le tube d'extraction (105) du système formant centrale thermique à combustion de combustible fossile (100) de manière à traverser le tube de décharge d'urgence (112), à bypasser la turbine à contrepression (117) et à s'écouler vers le condenseur.

6. Système formant centrale thermique à combustion de combustible fossile incluant une unité de séparation et de capture de dioxyde de carbone selon la revendication 3, comprenant en outre :
une unité de commande (400) pour délivrer un signal d'instruction afin de commander l'ouverture et la fermeture de la seconde valve de décharge d'urgence (155) sur la base d'un signal de déclenchement (127a, 129a) de l'unité de séparation et de capture de dioxyde de carbone (200) au moment d'un arrêt d'urgence de l'unité de séparation et de capture de dioxyde de carbone (200) et pour commander la vapeur réchauffée qui s'écoule via le tube d'extraction de vapeur réchauffée (150) du système formant centrale thermique à combustion de combustible fossile (100) de manière à traverser le second tube de décharge d'urgence (156), à bypasser la turbine à contrepression (107), et s'écouler vers le condenseur.

7. Système formant centrale thermique à combustion de combustible fossile incluant une unité de séparation et de capture de dioxyde de carbone selon la revendication 4, comprenant en outre :
une unité de commande (500), dans une opération à charge partielle du système formant centrale thermique à combustion de combustible fossile (100), pour délivrer un signal d'instruction afin de commander l'ouverture et la fermeture de la première valve de décharge d'urgence (111) sur la base d'un signal de déclenchement (127a, 129a) de l'unité de séparation et de capture de dioxyde de carbone (200) au moment d'un arrêt d'urgence de l'unité de séparation et de capture de dioxyde de carbone (200) et pour commander la vapeur extraite via le tube d'extraction (105) du système formant centrale thermique à combustion de combustible fossile (100) de manière à passer à travers le premier tube de décharge d'urgence (112), à bypasser la turbine à contrepression (107), et à s'écouler vers le condenseur, et
dans une opération à charge partielle totale du système formant centrale thermique à combustion de combustible fossile, pour délivrer un signal d'instruction afin de commander l'ouverture et la fermeture de la troisième valve de décharge d'urgence (163) et pour commander la vapeur extraite via le second tube d'extraction du système formant centrale thermique à combustion de combustible fossile de manière à passer à travers le troisième tube de décharge d'urgence (164), à bypasser la turbine à contrepression (107) et à s'écouler vers le condenseur.

8. Système formant centrale thermique à combustion de combustible fossile incluant une unité de séparation et de capture de dioxyde de carbone selon l'une quelconque des revendications 5 à 7, dans lequel :
le signal de déclenchement (127a, 129a) de l'unité de séparation et de capture de dioxyde de carbone est un signal de déclenchement (127a, 129a) d'une pompe de transfert (127, 129) pour transférer la solution absorbante entre la tour d'absorption (126) et la tour de reproduction (123) de l'unité de séparation et de capture de dioxyde de carbone (200).

9. Système formant centrale thermique à combustion de combustible fossile incluant une unité de séparation et de capture de dioxyde de carbone selon l'une quelconque des revendications 2 et 4, comprenant en outre :
une turbine à basse pression (118) entraînée par la vapeur extraite envoyée depuis la turbine à haute pression (103) vers la turbine à contrepression (107) via le tube d'extraction (105), et
une valve de commutation de trajet d'écoulement pour commuter une destination d'alimentation de la vapeur extraite envoyée depuis la turbine à haute pression (103) vers la turbine à contrepression (107) via le tube d'extraction (105) depuis la turbine à contrepression (107) vers la turbine à basse pression (118).

10. Système formant centrale thermique à combustion de combustible fossile incluant une unité de séparation de capture de dioxyde de carbone selon la revendication 4, comprenant en outre :
une turbine à basse pression (118) entraînée par la vapeur extraite envoyée depuis la turbine à pression intermédiaire (116) vers la turbine à contrepression (107), et
une valve de commutation de trajet d'écoulement pour commuter une destination d'alimentation de la vapeur extraite envoyée depuis la turbine à pression intermédiaire (116) vers la turbine à contrepression (107) depuis la turbine à contrepression (107) vers la turbine à basse pression (118).
